(19) Europäisches Patentamt / European Patent Office / Office européen des brevets

(11) **EP 4 275 914 A1**

(12) **EUROPEAN PATENT APPLICATION**
published in accordance with Art. 153(4) EPC

(43) Date of publication:
**15.11.2023   Bulletin 2023/46**

(21) Application number: **21917691.4**

(22) Date of filing: **22.12.2021**

(51) International Patent Classification (IPC):
$B60C\ 1/00$ (2006.01)   $C08C\ 19/02$ (2006.01)
$C08C\ 19/22$ (2006.01)   $C08F\ 297/04$ (2006.01)
$C08L\ 7/00$ (2006.01)   $C08L\ 15/00$ (2006.01)
$C08L\ 21/00$ (2006.01)   $C08K\ 3/011$ (2018.01)
$C08K\ 3/013$ (2018.01)   $C08K\ 3/04$ (2006.01)
$C08K\ 3/36$ (2006.01)   $B60C\ 15/06$ (2006.01)

(52) Cooperative Patent Classification (CPC):
**B60C 1/00; B60C 15/06; C08C 19/02; C08C 19/22; C08F 297/04; C08K 3/011; C08K 3/013; C08K 3/04; C08K 3/36; C08L 7/00; C08L 15/00; C08L 21/00;** Y02T 10/86

(86) International application number:
**PCT/JP2021/047600**

(87) International publication number:
**WO 2022/149471 (14.07.2022 Gazette 2022/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  07.01.2021   JP 2021001427
07.04.2021   JP 2021065420

(71) Applicant: **Asahi Kasei Kabushiki Kaisha**
**Tokyo 1000006 (JP)**

(72) Inventors:
• HAYATA, Daisuke
  Tokyo 100-0006 (JP)
• ARAKI, Yoshifumi
  Tokyo 100-0006 (JP)
• MOTOFUSA, Shinichi
  Tokyo 100-0006 (JP)

(74) Representative: **Strehl Schübel-Hopf & Partner**
**Maximilianstrasse 54**
**80538 München (DE)**

(54) **RUBBER COMPOSITION FOR CROSSLINKING, RUBBER COMPOSITION FOR TIRE, MOLDED BODY FOR TIRE SIDEWALL, SHEET, METHOD FOR PRODUCING TIRE SIDEWALL, AND TIRE SIDEWALL**

(57)    Provided is a crosslinking rubber composition containing: a rubber-like polymer (A) having an iodine value of 10 to 250 (g/100 g), comprising 3% by mass or more of an ethylene structure and less than 10% by mass of a vinyl aromatic monomer block, containing a nitrogen atom, and having a modification ratio measured by column adsorption GPC of 40% by mass or more; and a crosslinking agent (B).

EP 4 275 914 A1

**Description**

Technical Field

The present invention relates to a crosslinking rubber composition, a rubber composition for a tire, a molded article for a tire sidewall, a sheet, a method for producing a tire sidewall, and a tire sidewall.

Background Art

A crosslinking rubber composition containing a rubber-like polymer having an ethylene structure and containing a crosslinkable unsaturated group introduced therein has conventionally been proposed as a material of a tire member for purposes of increasing mechanical strength and permanent compression set (see, for example, Patent Documents 1 to 5).

Citation List

Patent Document

Patent Document 1: International Publication No. WO2003/085010
Patent Document 2: Japanese Patent Laid-Open No. 2010-270314
Patent Document 3: International Publication No. WO2019/151126
Patent Document 4: International Publication No. WO2019/151127
Patent Document 5: International Publication No. WO2019/078083

Summary of Invention

Technical Problem

The above-described conventionally proposed crosslinking rubber composition containing a rubber-like polymer having an ethylene structure and containing a crosslinkable unsaturated group has, however, the following problems: the crosslinking rubber composition has not yet obtained sufficient properties in terms of mechanical strength, fuel economy obtained in use in a tire member, and ozone resistance and is susceptible to improvement in these properties.

Therefore, an object of the present invention is to provide a crosslinking rubber composition having high mechanical strength, high fuel economy obtained in use in a tire member, and high ozone resistance.

Solution to Problem

The present inventors have made earnest studies to solve the above-described problems of the conventional techniques, and have found that a crosslinking rubber composition containing: a rubber-like polymer (A) in which an iodine value and ethylene structure and vinyl aromatic block contents respectively fall in prescribed numerical ranges; and a crosslinking agent (B) can solve the above-described problems of the conventional techniques, leading to accomplishment of the present invention.

Specifically, the present invention provides the following:

[1] A crosslinking rubber composition, comprising:

a rubber-like polymer (A) having an iodine value of 10 to 250 (g/100 g), comprising 3% by mass or more of an ethylene structure and less than 10% by mass of a vinyl aromatic monomer block, comprising a nitrogen atom, and having a modification ratio measured by column adsorption GPC of 40% by mass or more; and
a crosslinking agent (B).

[2] The crosslinking rubber composition according to [1], wherein
the rubber-like polymer (A) comprises 35% by mass or less of a vinyl aromatic monomer unit.
[3] The crosslinking rubber composition according to [1] or [2], wherein
the rubber-like polymer (A) has a vinyl and butylene unit content of 20% by mol or more.
[4] A rubber composition for a tire, comprising the crosslinking rubber composition according to any of [1] to [3],

the rubber composition for the tire comprising:

100 parts by mass of a rubber component comprising 30 parts by mass or more of a natural rubber and 10 parts by mass or more of the rubber-like polymer (A); and
the crosslinking agent (B).

[5] The rubber composition for the tire according to [4], wherein
a content of the rubber-like polymer (A) is 30 parts by mass or more in 100 parts by mass of the rubber component.
[6] The rubber composition for the tire according to [4] or [5], further comprising
carbon black having a nitrogen adsorption specific surface area ($N_2SA$) of 20 to 150 $m^2/g$ and/or a silica-based inorganic filler having a nitrogen adsorption specific surface area ($N_2SA$) of 110 to 220 $m^2/g$.
[7] The rubber composition for the tire according to [6], wherein
the rubber composition for the tire comprises:

100 parts by mass of the rubber component comprising 30 parts by mass or more of the natural rubber and 10 parts by mass or more of the rubber-like polymer (A);
30 to 90 parts by mass of the carbon black having a nitrogen adsorption specific surface area ($N_2SA$) of 20 to 150 $m^2/g$ and/or the silica-based inorganic filler having a nitrogen adsorption specific surface area ($N_2SA$) of 110 to 220 $m^2/g$; and
the crosslinking agent (B).

[8] A molded article for a tire sidewall, comprising the crosslinking rubber composition according to any of [1] to [3], the molded article for the tire sidewall comprising:

100 parts by mass of a rubber component comprising 30 parts by mass or more of a natural rubber and 10 parts by mass or more of the rubber-like polymer (A);
30 to 70 parts by mass of carbon black having a nitrogen adsorption specific surface area ($N_2SA$) of 20 to 150 $m^2/g$ and/or a silica-based inorganic filler having a nitrogen adsorption specific surface area ($N_2SA$) of 110 to 220 $m^2/g$; and
the crosslinking agent (B).

[9] A sheet comprising the crosslinking rubber composition according to any of [1] to [3], wherein
the rubber-like polymer (A) has a glass transition temperature of -60°C or less and a weight average molecular weight of 200,000 or more.
[10] The sheet according to [9], wherein
the sheet comprises 100 parts by mass of a rubber component comprising 30 parts by mass or more of a natural rubber, 10 parts by mass or more of a butadiene rubber, and 10 parts by mass or more of the rubber-like polymer (A).
[11] The sheet according to [9] or [10], wherein
a content of the rubber-like polymer (A) is 30 parts by mass or more in 100 parts by mass of the rubber component.
[12] The sheet according to any of [9] to [11], further comprising
50 to 90 parts by mass of carbon black having a nitrogen adsorption specific surface area ($N_2SA$) of 20 to 150 $m^2/g$ and/or a silica-based inorganic filler having a nitrogen adsorption specific surface area ($N_2SA$) of 110 to 220 $m^2/g$ with respect to 100 parts by mass of the rubber component.
[13] The sheet according to any of [9] to [12], wherein
an SP value and the glass transition temperature Tg of the rubber-like polymer (A) satisfy

$$(-0.03 \times Tg + 14.4) < SP\ value < (-0.03 \times Tg + 15.4).$$

[14] The sheet according to any of [9] to [13], wherein
the sheet is a sheet for a tire sidewall.
[15] A method for producing a tire sidewall, comprising:

a step of kneading the crosslinking rubber composition according to any of [1] to [3], a natural rubber, and a butadiene rubber such that a content of the natural rubber is 30 parts by mass or more, a content of the butadiene rubber is 10 parts by mass or more, and a content of the rubber-like polymer (A) is 10 parts by mass or more, in 100 parts by mass of a rubber component;

a step of molding the resultant in the shape of a sheet; and
a step of crosslinking the obtained molded article in the shape of a sheet.

[16] A tire sidewall comprising:

10 parts by mass or more of a rubber-like polymer (A) having an iodine value of 10 to 250 (g/100 g), comprising 3% by mass or more of an ethylene structure and less than 10% by mass of a vinyl aromatic monomer block, comprising a nitrogen atom, having a modification ratio measured by column adsorption GPC of 40% by mass or more, having a glass transition temperature of -60°C or less, and having a weight average molecular weight of 200,000 or more;
30 parts by mass or more of a natural rubber; and
10 parts by mass or more of a butadiene rubber, wherein
the tire sidewall has a structure where the rubber-like polymer (A), the natural rubber, and the butadiene rubber are crosslinked.

[17] The tire sidewall according to [16], wherein
an SP value and the glass transition temperature Tg of the rubber-like polymer (A) satisfy

$$(-0.03 \times Tg + 14.4) < SP\ value < (-0.03 \times Tg + 15.4).$$

[18] The tire sidewall according to [16] or [17], wherein
the tire sidewall comprises:

100 parts by mass of a rubber component comprising 10 parts by mass or more of the rubber-like polymer (A), 30 parts by mass or more of the natural rubber, and 10 parts by mass or more of the butadiene rubber;
50 to 90 parts by mass of carbon black having a nitrogen adsorption specific surface area ($N_2SA$) of 20 to 150 $m^2/g$ and/or a silica-based inorganic filler having a nitrogen adsorption specific surface area ($N_2SA$) of 110 to 220 $m^2/g$; and
the crosslinking agent (B).

Advantageous Effects of Invention

According to the present invention, a crosslinking rubber composition having high mechanical strength, high fuel economy obtained in use in a tire member, and high ozone resistance can be obtained.

Description of Embodiment

Now, an embodiment for practicing the present invention (hereinafter referred to as the "present embodiment") will be described in detail.
It is noted that the following embodiment is merely illustrative for describing the present invention, and that the present invention is not limited to the following embodiment. The present invention can be practiced with modifications appropriately made within the scope thereof.

[Crosslinking Rubber Composition]

A crosslinking rubber composition of the present embodiment contains: a rubber-like polymer (A) having an iodine value of 10 to 250 (g/100 g), containing 3% by mass or more of an ethylene structure and less than 10% by mass of a vinyl aromatic monomer block, containing a nitrogen atom, and having a modification ratio measured by column adsorption GPC of 40% by mass or more; and a crosslinking agent (B).
Owing to this configuration, a crosslinking rubber composition having high mechanical strength, high fuel economy obtained in use in a tire member, and high ozone resistance can be obtained.

(Rubber-like Polymer (A))

The rubber-like polymer (A) contained in the crosslinking rubber composition of the present embodiment has an iodine value of 10 to 250 (g/100 g), contains 3% by mass or more of an ethylene structure and less than 10% by mass of a vinyl aromatic monomer block, contains a nitrogen atom, and has a modification ratio measured by column adsorption GPC of 40% by mass or more.

<Iodine Value>

The iodine value of the rubber-like polymer (A) is 10 to 250 (g/100 g).

From the viewpoints of co-crosslinkability obtained in using the rubber-like polymer (A) in the crosslinking rubber composition and flexibility of a material of a tire obtained in use as the material of a tire, the iodine value is 10 (g/100 g) or more, preferably 15 (g/100 g) or more, more preferably 30 (g/100 g) or more, and further preferably 50 (g/100 g) or more.

On the other hand, from the viewpoint of high tensile strength and abrasion resistance of a material of a tire obtained in use as the material of a tire, the iodine value is 250 (g/100 g) or less, preferably 200 (g/100 g) or less, more preferably 150 (g/100 g) or less, further preferably 100 (g/100 g) or less, and still further preferably 70 (g/100 g) or less.

The iodine value can be measured in accordance with a method described in "JIS K 0070:1992".

The iodine value is a value, in terms of the weight in grams of iodine, corresponding to an amount of halogen reacting with 100 g of a target substance, and hence the iodine value is expressed in the unit of "g/100 g".

For example, if a conjugated diene compound and a vinyl aromatic compound are copolymerized in a method for producing the rubber-like polymer described below, since the conjugated diene compound has a double bond, the iodine value of the rubber-like polymer is lower when the content of a conjugated diene monomer unit is lower. Alternatively, if a conjugated diene monomer unit is hydrogenated in the production method, the iodine value is lower as a hydrogenation rate is higher.

The iodine value of the rubber-like polymer can be controlled to fall in the above-described numerical range by adjusting an addition amount of a conjugated diene compound or the like having an unsaturated bond, polymerization conditions such as a polymerization time and a polymerization temperature, and conditions employed in hydrogenation process such as a hydrogenation amount and a hydrogenation time.

<Ethylene Structure Content>

The rubber-like polymer (A) used in the crosslinking rubber composition of the present embodiment contains 3% by mass or more of an ethylene structure content (i.e., ethylene structure ≥ 3% by mass).

When the ethylene structure in the rubber-like polymer (A) is 3% by mass or more, an effect that the tensile strength of the crosslinking rubber composition using the rubber-like polymer (A) is less liable to be lowered can be obtained. The ethylene structure is preferably 5% by mass or more, more preferably 20% by mass or more, and further preferably 40% by mass or more.

The ethylene structure is preferably 90% by mass or less, more preferably 80% by mass or less, further preferably 70% by mass or less, and still further preferably 60% by mass or less. When the ethylene structure in the rubber-like polymer (A) is 90% by mass or less, excellent rubber elasticity can be obtained.

An ethylene structure contained in the rubber-like polymer (A) encompasses all ethylene structures including an ethylene structure obtained by polymerizing an ethylene monomer, and an ethylene structure obtained by polymerizing a conjugated diene monomer and then hydrogenating the resultant. For example, when a 1,4-butadiene unit is hydrogenated, two ethylene structures are obtained, and when a 1,4-isoprene unit is hydrogenated, one propylene structure and one ethylene structure are obtained.

The ethylene structure in the rubber-like polymer (A) can be measured by a method described in Examples below, and can be controlled to fall in the above-described numerical range by adjusting an amount of ethylene added, an amount of a conjugated diene compound added, a hydrogenation rate and the like.

<Vinyl Aromatic Monomer Block Content>

The rubber-like polymer (A) used in the crosslinking rubber composition of the present embodiment has a vinyl aromatic monomer block content of less than 10% by mass, namely, vinyl aromatic monomer block < 10% by mass.

A vinyl aromatic monomer block refers to a block including a chain of eight or more vinyl aromatic monomer units.

When the vinyl aromatic monomer block content of the rubber-like polymer (A) is less than 10% by mass, fuel economy obtained when the crosslinking rubber composition of the present embodiment is used as a raw material of a tire tends to be easily improved.

The vinyl aromatic monomer block content of the rubber-like polymer (A) is preferably 7% by mass or less, more preferably 5% by mass or less, and further preferably 3% by mass or less.

From the viewpoint of flexibility of the crosslinking rubber composition of the present embodiment, the number of blocks each including a chain of 30 or more vinyl aromatic monomer units is preferably small or zero for the vinyl aromatic monomer block.

The form of the vinyl aromatic monomer block can be specifically measured, for example, when the copolymer is a butadiene-styrene copolymer, by decomposing the copolymer by Kolthoff method (method described in I. M. KOLTHOFF, et al., J. Polym. Sci. 1, 429 (1946)) to analyze an amount of polystyrene insoluble in methanol. As another method, a known method, as described in International Publication No. WO2014/133097, such as measurement of a chain of styrene units by NMR can be employed for the analysis.

The vinyl aromatic monomer block content of the rubber-like polymer (A) can be controlled to fall in the above-described numerical range by adjusting a method for adding a vinyl aromatic compound, or by adjusting an addition amount of a polymerization aid, a polymerization temperature or the like.

<Monomer Unit for Causing Unsaturated Group to be Contained in Rubber-like Polymer (A)>

The rubber-like polymer (A) used in the crosslinking rubber composition of the present embodiment preferably contains a monomer unit having an unsaturated group, such as a conjugated diene monomer unit or a myrcene, in a content of 2% by mass or more.

From the viewpoints of economic efficiency and productivity, the rubber-like polymer (A) more preferably contains a conjugated diene monomer unit.

When a conjugated diene monomer unit or a myrcene is contained as a component of the rubber-like polymer (A), since the conjugated diene monomer unit or the myrcene has a double bond, the resultant rubber-like polymer (A) also has a double bond, and becomes a crosslinkable unsaturated group.

The content of the monomer unit having an unsaturated group, such as a conjugated diene monomer unit or a myrcene, in the rubber-like polymer (A) is closely related to the iodine value described above.

When the content of the monomer unit having an unsaturated group, such as a conjugated diene monomer unit or a myrcene, is 2% by mass or more, the rubber-like polymer is excellent in view of ease of crosslinking. The content of the conjugated diene monomer unit is more preferably 3% by mass or more, and further preferably 6% by mass or more.

The content of the monomer unit having an unsaturated group, such as a conjugated diene monomer unit or a myrcene, is preferably 50% by mass or less, more preferably 30% by mass or less, and further preferably 20% by mass or less. When the content of the monomer unit having an unsaturated group is 50% by mass or less, the crosslinking rubber composition of the present embodiment is excellent in weather resistance and resistance to degradation over time.

The content of the monomer unit having an unsaturated group, such as a conjugated diene monomer unit or a myrcene, in the rubber-like polymer (A) can be measured by a method for measuring "hydrogenation rate" described in Examples below, and can be controlled to fall in the above-described numerical range by adjusting an amount of a monomer having an unsaturated group such as a conjugated diene monomer unit or a myrcene to be added as described below in a process of producing the rubber-like polymer (A), and a hydrogenation rate.

<Content of $\alpha$-Olefin in Rubber-like Polymer (A)>

A content of $\alpha$-olefin in all monomer units excluding the vinyl aromatic monomer unit in the rubber-like polymer (A) is preferably 13% by mass or more, more preferably 20% by mass or more, and further preferably 30% by mass or more from the viewpoint of productivity of the rubber-like polymer (A).

On the other hand, from the viewpoint of mechanical strength of material of a tire obtained when the crosslinking rubber composition is used in the material of a tire, the content of $\alpha$-olefin is preferably 70% by mass or less, more preferably 60% by mass or less, further preferably 55% by mass or less, and still further preferably 50% by mass or less.

When the rubber-like polymer (A) is produced by hydrogenating a polymer or a copolymer of a conjugated diene compound, the content of $\alpha$-olefin can be controlled by adjusting a content of a conjugated diene monomer unit before hydrogenation, a vinyl bond content, and a hydrogenation rate.

It is noted that 1,2-butadiene is changed, through hydrogenation, into butylene to obtain an $\alpha$-olefin structure.

The content of $\alpha$-olefin in the rubber-like polymer (A) can be measured by $^1$H-NMR measurement described in Examples below.

<Content of Vinyl Aromatic Monomer Unit in Rubber-like Polymer (A)>

A content of the vinyl aromatic monomer unit in the rubber-like polymer (A) used in the crosslinking rubber composition of the present embodiment is preferably 5% by mass or more, more preferably 10% by mass or more, further preferably 15% by mass or more, and still further preferably 20% by mass or more from the viewpoints of resistance to deformation during transport of a molded article of the crosslinking rubber composition of the present embodiment, and break strength and wet skid resistance of a tire member obtained when the crosslinking rubber composition of the present embodiment is used in a material of the tire member such as a tire tread.

On the other hand, from the viewpoint of cuttability in measuring a sheet-shaped or block-shaped molded article, from the viewpoint of adhesiveness of a packaging film and break resistance of the packaging film, and from the viewpoint of fuel economy and abrasion resistance of a tire obtained when the crosslinking rubber composition of the present embodiment is used in a material of a tire member such as tire tread, the content of the vinyl aromatic monomer unit in the rubber-like polymer (A) is preferably 45% by mass or less, more preferably 35% by mass or less, and further preferably 25% by mass or less.

If the crosslinking rubber composition of the present embodiment contains a hydrogenated resin (C) described below, the content of the aromatic monomer unit is more preferably less than 30% by mass, and further preferably 25% by mass or less from the viewpoint of compatibility between the rubber-like polymer (A) and the hydrogenated resin (C).

The content of the vinyl aromatic monomer unit in the rubber-like polymer (A) can be measured by a method described in Examples below, and can be controlled to fall in the above-described numerical range by adjusting the amount of a vinyl aromatic compound added in polymerization process.

<Vinyl and Butylene Unit Content of Rubber-like Polymer (A)>

The rubber-like polymer (A) used in the crosslinking rubber composition of the present embodiment preferably has a vinyl and butylene unit content of 20% by mol or more.

The vinyl and butylene unit content is preferably 20% by mol or more, more preferably 25% by mol or more, and further preferably 30% by mol or more from the viewpoints of productivity of the rubber-like polymer (A), processability of the crosslinking rubber composition of the present embodiment and wet skid resistance of a tire tread obtained in use as a material of the tire tread. From the viewpoints of heat aging resistance of the rubber-like polymer (A) and fuel economy of a tire tread obtained in use as a material of the tire tread, the content is preferably 60% by mol or less, more preferably 50% by mol or less, and further preferably 45% by mol or less.

The vinyl and butylene unit content of the rubber-like polymer (A) can be measured by $^1$H-NMR measurement described in Examples below.

The vinyl and butylene unit content of the rubber-like polymer (A) can be controlled to fall in the above-described numerical range by adjusting an amount of a polar compound added and a polymerization temperature employed in a polymerization process of the rubber-like polymer (A).

<Modification of Rubber-like Polymer (A)>

In the crosslinking rubber composition of the present embodiment, the rubber-like polymer (A) contains a nitrogen atom from the viewpoints of peeling resistance of the crosslinking rubber composition from a molded article of the crosslinking rubber composition, and fuel economy of a tire obtained in use as a material of the tire.

A modification ratio, measured by column adsorption GPC of the rubber-like polymer (A) used in the crosslinking rubber composition of the present embodiment, is 40% by mass or more from the viewpoints of mechanical strength of the crosslinking rubber composition and dispersibility of a filler such as silica or carbon black in a material of a tire containing the filler. The modification ratio of the rubber-like polymer (A) is preferably 60% by mass or more, and more preferably 70% by mass or more.

Herein, the term "modification ratio" refers to a mass ratio of a polymer having a nitrogen atom-containing functional group to the total amount of the rubber-like polymer (A).

A position where a nitrogen atom is introduced in the rubber-like polymer (A) used in the crosslinking rubber composition of the present embodiment may be any one of a polymerization starting end, a molecular chain (including a graft product), and a polymerization end of the rubber-like polymer (A).

The modification ratio of the rubber-like polymer (A) can be controlled to fall in the above-described numerical range by adjusting an amount of a modifier added to the rubber-like polymer (A) and a modification process time.

When the rubber-like polymer (A) used in the crosslinking rubber composition of the present embodiment is produced by polymerizing a conjugated diene compound and hydrogenating the resultant, from the viewpoints of polymerization productivity, a high modification ratio, and abrasion resistance and fuel economy of a tire obtained in use as a material of the tire, it is preferable to employ a method for introducing a tin atom or a nitrogen atom into the polymer with a coupling agent containing a tin atom or a nitrogen atom. In particular, it is more preferable to employ a method for introducing a nitrogen atom into the polymer with a coupling agent containing a nitrogen atom.

From the viewpoints of polymerization productivity and a high modification ratio, a coupling agent containing a nitrogen atom is preferably an isocyanate compound, an isothiocyanate compound, an isocyanuric acid derivative, a nitrogen group-containing carbonyl compound, a nitrogen group-containing vinyl compound, a nitrogen group-containing epoxy compound, a nitrogen group-containing alkoxysilane compound, or the like.

Among these coupling agents containing a nitrogen atom, from the viewpoints of polymerization productivity and a high modification ratio of the rubber-like polymer (A) and tensile strength of a material of a tire obtained in use as the material of a tire, a nitrogen group-containing alkoxysilane compound is more preferred.

Examples of the nitrogen group-containing alkoxysilane compound include, but are not limited to, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy-2-methyl-1-(3-trimethoxysilylpropyl)-1-aza-2-silacyclopentane, 2-ethoxy-2-ethyl-1-(3-triethoxysilylpropyl)-1-aza-2-silacyclopentane, 2-methoxy-2-methyl-1-(3-dimethoxymethylsilylpropyl)-1-aza-2-silacyclopentane, 2-ethoxy-2-ethyl-1-(3-diethoxyethylsilylpropyl)-1-aza-2-silacyclopentane, tris(3-trimethoxysilylpropyl)amine, tris(3-methyldimethoxysilylpropyl)amine, tris(3-triethoxysilylpropyl)amine, tris(3-methyldiethoxysilylpropyl)amine, tris(trimethoxysilylmethyl)amine, tris(2-trimethoxysilylethyl)amine, tris(4-trimethoxysilylbutyl)amine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, and $N^1$-(3-(bis(3-(trimethoxysilyl)propyl)amino)propyl)-$N^1$-methyl-$N^3$-(3-(methyl(3-(trimethoxysilyl)propyl)amino)propyl)-$N^3$-(3-(trimethoxysilyl)propyl)-1,3-propanediamine.

When the rubber-like polymer (A) used in the crosslinking rubber composition of the present embodiment is produced by copolymerizing ethylene and a conjugated diene compound, the rubber-like polymer (A) contains a nitrogen atom and preferably further contains a tin atom or a silicon atom from the viewpoints of break strength of the crosslinking rubber composition of the present embodiment, and fuel economy, abrasion resistance and flexibility of a tire obtained in use as a material of the tire.

From the viewpoint of productivity of the rubber-like polymer (A), it is preferable to employ a method in which a tin atom, a nitrogen atom or a silicon atom is introduced with a coupling agent containing a nitrogen atom and further with a coupling agent containing a tin atom or a silicon atom when a conversion rate in the polymerization reaction reaches 100%.

Examples of the coupling agent containing a nitrogen atom, a tin atom, or a silicon atom include, but are not limited to, a tin-containing compound such as bis(maleic acid-1-octadecyl)dioctyltin, an isocyanate compound such as 4,4-diphenylmethane diisocyanate, and an alkoxysilane compound such as glycidylpropyltrimethoxysilane.

<Glass Transition Temperature of Rubber-like Polymer (A)>

A glass transition temperature of the rubber-like polymer (A) used in the crosslinking rubber composition of the present embodiment is preferably -90°C or more, more preferably -80°C or more, and further preferably - 75°C or more from the viewpoint of tensile strength of the crosslinking rubber composition.

On the other hand, from the viewpoints of flexibility of the crosslinking rubber composition and cut resistance of a sheet of the crosslinking rubber composition of the present embodiment obtained in a process of producing a tire, the glass transition temperature is preferably -15°C or less, more preferably -30°C or less, and further preferably -40°C or less.

With respect to the glass transition temperature of the rubber-like polymer (A), a peak top (an inflection point) of a DSC differential curve obtained in recording a DSC curve during temperature increase in a prescribed temperature range in accordance with ISO 22768: 2006 is determined as the glass transition temperature.

<Weight Average Molecular Weight of Rubber-like Polymer (A)>

A weight average molecular weight of the rubber-like polymer (A) used in the crosslinking rubber composition of the present embodiment is preferably 100,000 or more, more preferably 150,000 or more, further preferably 200,000 or more, and still further preferably 250,000 or more from the viewpoints of compatibility with a crosslinking agent (B) and a material such as a rubber component contained in the crosslinking rubber composition, and tensile elongation of the crosslinking rubber composition.

On the other hand, from the viewpoint of processability of the crosslinking rubber composition, the weight average molecular weight is preferably 1,000,000 or less, more preferably 700,000 or less, further preferably 600,000 or less, and still further preferably 500,000 or less.

From the viewpoints of compatibility with a crosslinking agent (B) and a material such as a rubber component contained in the crosslinking rubber composition and fuel economy obtained in use in a tire, a molecular weight distribution (= weight average molecular weight/number average molecular weight) of the rubber-like polymer (A) is preferably 2.0 or less, more preferably 1.8 or less, and further preferably 1.6 or less. On the other hand, from the viewpoint of processability of the crosslinking rubber composition, the molecular weight distribution is preferably 1.05 or more, more preferably 1.2 or more, and further preferably 1.4 or more.

The weight average molecular weight and the molecular weight distribution can be calculated based on a molecular weight in terms of polystyrene measured by GPC (gel permeation chromatography).

The weight average molecular weight and the molecular weight distribution of the rubber-like polymer (A) can be controlled to fall in the above-described ranges by adjusting various polymerization conditions employed in the polymerization process such as an addition amount of a monomer, a polymerization time, a polymerization temperature, and a polymerization pressure.

The rubber-like polymer (A) used in the crosslinking rubber composition of the present embodiment may contain two or more polymer blocks respectively having different ratios among a vinyl aromatic monomer unit, ethylene, α-olefin and a conjugated diene monomer unit from the viewpoints of compatibility with a crosslinking agent (B) and a material such as a rubber component contained in the crosslinking rubber composition, and obtaining proper flexibility over a wide range from a low temperature to a high temperature of the crosslinking rubber composition. From the viewpoint of flexibility, the content of the vinyl aromatic monomer unit in each polymer block is preferably 60% by mass or less, more preferably 50% by mass or less, and further preferably 40% by mass or less.

<Hydrogenation Rate of Rubber-like Polymer (A)>

A hydrogenation rate of the rubber-like polymer (A) used in the crosslinking rubber composition of the present embodiment is preferably 60 to 95% by mol, more preferably 70 to 90% by mol, and further preferably 75 to 85% by mol, from the viewpoint of physical property balance between fuel economy and mechanical strength of the crosslinking rubber composition of the present embodiment.

The hydrogenation rate of the rubber-like polymer (A) can be measured by a method described in Examples below.

The hydrogenation rate can be controlled to fall in the above-described numerical range by appropriately adjusting conditions in a hydrogenation process.

<Method for Producing Rubber-like Polymer (A)>

The rubber-like polymer (A) used in the crosslinking rubber composition of the present embodiment is preferably produced by polymerizing or copolymerizing at least a conjugated diene compound, and then hydrogenating some or most of double bonds, or by copolymerizing at least ethylene and a conjugated diene compound.

As the method in which at least a conjugated diene compound is polymerized or copolymerized and double bonds are then hydrogenated, as described in, for example, International Publication No. WO96/05250, Japanese Patent Laid-Open No. 2000-053706, and International Publication Nos. WO2003/085010, WO2019/151126, WO2019/151127, WO2002/002663 and WO2015/006179, a conjugated diene compound is polymerized by anionic polymerization under various selected conditions with various additives added, and the resultant is copolymerized with another monomer if necessary, and then hydrogenated.

As the method in which at least ethylene and a conjugated diene compound are copolymerized, as described in, for example, International Publication Nos. WO2019/078083, WO2019/171679 and WO2019/142501, ethylene and a conjugated diene compound are copolymerized, with another monomer added if necessary, by coordination polymerization under various selected conditions with various additives added.

From the viewpoint of increasing the degree of freedom in the structure of a producible rubber-like polymer, the rubber-like polymer (A) is preferably produced by polymerizing a conjugating diene compound and then hydrogenating the resultant.

Examples of the conjugated diene compound include, but are not limited to, 1,3-butadiene, isoprene, 2,3-dimethyl-1,3-butadiene, 1,3-pentadiene, 3-methyl-1,3-pentadiene, 1,3-hexadiene, and 1,3-heptadiene.

Among these, from the viewpoint of industrial availability, 1,3-butadiene and isoprene are preferred, and 1,3-butadiene is more preferred.

One of these may be singly used, or two or more of these may be used together.

A compound other than the conjugated diene compound for producing the rubber-like polymer (A) includes a vinyl aromatic compound.

Examples of the vinyl aromatic compound include, but are not limited to, styrene, p-methylstyrene, α-methylstyrene, vinyl ethyl benzene, vinyl xylene, vinyl naphthalene, diphenylethylene, vinyl benzyl dimethylamine, (4-vinylbenzyl)dimethyl aminoethyl ether, N,N-dimethylaminoethyl styrene, N,N-dimethylaminomethyl styrene, and tertiary amino group-containing diphenylethylene (such as 1-(4-N,N-dimethylaminophenyl)-1-phenylethylene).

Among these, from the viewpoint of industrial availability, styrene is preferred.

One of these may be singly used, or two or more of these may be used together.

Another monomer may be used, if necessary, as a compound for producing the rubber-like polymer (A), in addition to the conjugated diene compound and the vinyl aromatic compound.

Examples of the additional monomer include, but are not limited to, unsaturated carboxylic acid ester, unsaturated carboxylic acid, an α,β-unsaturated nitrile compound, α-olefin (such as butylene, propylene, pentene, or hexene), ethylene, myrcene, ethylidene norbornene, isopropylidene norbornene, cyclopentadiene, and divinylbenzene.

One of these may be singly used, or two or more of these may be used together.

When the rubber-like polymer (A) used in the crosslinking rubber composition of the present embodiment is produced by polymerizing or copolymerizing a conjugated diene compound, and hydrogenating the resultant, adjustment of a vinyl bond content of a conjugated diene monomer unit of a conjugated diene-based polymer before hydrogenation is significant from the viewpoint of properties of the rubber-like polymer (A) and properties of the crosslinking rubber composition of the present embodiment. From the viewpoints of productivity of the rubber-like polymer (A) and high wet skid resistance of a tire obtained in use as a material of the tire, the vinyl bond content of a conjugated diene monomer unit is preferably 10% by mol or more, and more preferably 20% by mol or more. From the viewpoint of mechanical strength of a tire obtained in use as a material of the tire, the vinyl bond content is preferably 75% by mol or less, more preferably 60% by mol or less, further preferably 45% by mol or less, and still further preferably 30% by mol or less.

The vinyl bond content can be measured by a method described in Examples below.

The polymerization process and the hydrogenation process can be performed respectively by either a batch method or a continuous method.

Intermolecular and intramolecular distributions in the rubber-like polymer (A) of the hydrogenation rate, the ethylene, and monomer units of a conjugated diene monomer, a myrcene, an $\alpha$-olefin, and a vinyl aromatic monomer, and the like are not especially limited but these may be uniformly present, non-uniformly present, or present with a distribution.

(Addition of Additive to Rubber-like Polymer (A))

In the production of the rubber-like polymer (A) used in the crosslinking rubber composition of the present embodiment, various additives are preferably added to the rubber-like polymer (A) for use in the crosslinking rubber composition of the present embodiment.

<Rubber Softener>

From the viewpoint of improving productivity of the rubber-like polymer (A) and processability obtained in blending an inorganic filler or the like in production of a tire, 1 to 30% by mass of a rubber softener is preferably added as an additive to the rubber-like polymer (A). If the rubber-like polymer (A) has a high molecular weight, for example, if the weight average molecular weight exceeds 1,000,000, the rubber softener is used preferably in an amount of 15 to 30% by mass. On the other hand, in order to increase the degree of freedom in an amount of a filler blended in obtaining a rubber composition containing the filler, the rubber softener is used preferably in an amount of 1 to 15% by mass.

The content of the rubber softener in the crosslinking rubber composition of the present embodiment containing the rubber-like polymer (A) is preferably 20% by mass or less, more preferably 10% by mass or less, and further preferably 5% by mass or less from the viewpoint of properties of degradation over time of a tire caused in use as a material of the tire.

The rubber softener is not especially limited, and examples include an extender oil, a liquid rubber, and a resin. From the viewpoints of processability, productivity, and economic efficiency, an extender oil is preferable.

As a method for adding the rubber softener to the rubber-like polymer (A), although not limited to the following, a method in which the rubber softener is added to be mixed with a rubber-like polymer (A) solution, and the thus obtained rubber-like polymer (A) solution containing the rubber softener is desolvated is preferably employed.

[Extender Oil]

Examples of the extender oil used as the rubber softener include an aromatic oil, a naphthenic oil, and a paraffin oil.

Among these, from the viewpoint of environmental safety, and from the viewpoints of oil bleed prevention and wet grip characteristics, an aroma substitute oil containing 3% by mass or less of a polycyclic aromatic (PCA) component in accordance with the IP 346 method is preferred. Examples of the aroma substitute oil include TDAE (Treated Distillate Aromatic Extracts) and MES (Mild Extraction Solvate) described in Kautschuk Gummi Kunststoffe 52 (12) 799 (1999), and RAE (Residual Aromatic Extracts).

<Rubber Stabilizer>

A rubber stabilizer is preferably added to the rubber-like polymer (A) used in the crosslinking rubber composition of the present embodiment after the polymerization process thereof from the viewpoints of prevention of gel formation and processing stability.

As the rubber stabilizer, examples include, but are not limited to, antioxidants such as 2,6-di-tert-butyl-4-hydroxytoluene (hereinafter sometimes referred to as "BHT"), n-octadecyl-3-(4'-hydroxy-3',5'-di-tertbutylphenol)propionate, and 2-methyl-4,6-bis[(octylthio)methyl]phenol.

(Physical Properties of Rubber-like Polymer (A))

<Residual Amount of Solvent>

A residual amount, in the rubber-like polymer (A) used in the crosslinking rubber composition of the present embodiment or a crosslinking rubber composition obtained by adding a crosslinking agent (B) described below and various additives thereto, of a polymerization solvent used in the polymerization process of the rubber-like polymer (A) is preferably smaller from the viewpoint of an odor and VOC reduction. Specifically, the residual amount is preferably 5,000 ppm or less, more preferably 3,000 ppm or less, and further preferably 1,500 ppm or less. From the viewpoint of balance between the properties and economic efficiency, the residual amount is preferably 50 ppm or more, more preferably 150 ppm or more, and further preferably 300 ppm or more.

<Water Content>

A water content of the rubber-like polymer (A) used in the crosslinking rubber composition of the present embodiment or in a crosslinking rubber composition obtained by adding a crosslinking agent (B) described below and various additives thereto is preferably 0.05% by mass or more and 1.5% by mass or less. The water content in the crosslinking rubber composition is preferably 0.05% by mass or more, more preferably 0.1% by mass or more, and further preferably 0.2% by mass or more from the viewpoint of inhibiting gel formation in drying after polymerization solvent removal. On the other hand, from the viewpoints of prevention of condensation and discoloration resistance of the crosslinking rubber composition, the water content is preferably 1.5% by mass or less, more preferably 1.0% by mass or less, and further preferably 0.8% by mass or less.

<Mooney Viscosity>

A Mooney viscosity of the rubber-like polymer (A) used in the crosslinking rubber composition of the present embodiment or a crosslinking rubber composition obtained by adding a crosslinking agent (B) described below and various additives thereto can be an index including information of the rubber-like polymer (A), such as the molecular weight, the molecular weight distribution, the branch number, the content of a softener, the residual amount of a solvent, and the water content.

The Mooney viscosity measured at 100°C of the rubber-like polymer (A) or the crosslinking rubber composition is preferably 40 or more, more preferably 50 or more, and further preferably 55 or more from the viewpoints of abrasion resistance of the crosslinking rubber composition of the present embodiment, and steering stability and break strength of a tire obtained in use as a material of the tire. On the other hand, from the viewpoints of productivity of the rubber-like polymer (A) or the crosslinking rubber composition, and processability of the rubber composition containing a filler or the like blended, the Mooney viscosity is preferably 170 or less, more preferably 150 or less, further preferably 130 or less, and still further preferably 110 or less.

The Mooney viscosity can be measured by a method prescribed in ISO 289, and specifically, can be measured by a method described in Examples below.

<Mooney Stress Relaxation Rate>

A Mooney stress relaxation rate of the rubber-like polymer (A) used in the crosslinking rubber composition of the present embodiment or a crosslinking rubber composition obtained by adding a crosslinking agent (B) described below and various additives thereto measured at 100°C is preferably 0.80 or less, more preferably 0.7 or less, and further preferably 0.6 or less from the viewpoint of moldability.

A Mooney stress relaxation rate can be an index of entanglement among molecules in a conjugated diene-based polymer, and a lower Mooney stress relaxation rate means that molecules more largely entangle with one another. The Mooney stress relaxation rate can be lowered by increasing the molecular weight of the rubber-like polymer (A), increasing a branch number with the above-described coupling agent, a branching agent or the like, or increasing the Mooney viscosity by reducing the amount of a rubber softener added.

The Mooney stress relaxation rate can be obtained as follows: A sample collected from the rubber-like polymer (A) or the crosslinking rubber composition using the rubber-like polymer (A) is preheated at 100°C for 1 minute, and then, a rotor is rotated at 2 rpm for measuring a Mooney viscosity ($ML_{(1+4)}$) based on a torque obtained after 4 minutes. Thereafter, the rotation of the rotor is immediately stopped, a torque is recorded, in Mooney unit, every 0.1 second for 1.6 to 5 seconds after stopping the rotor, and in a double logarithmic plot of the torque and the time (in sec), a slope of a line is obtained, and an absolute value of the slope is determined as the Mooney stress relaxation rate.

(Method for Molding Rubber-like Polymer (A) or Crosslinking Rubber Composition)

The rubber-like polymer (A) used in the crosslinking rubber composition of the present embodiment or the crosslinking rubber composition using the rubber-like polymer is preferably molded in the shape of a sheet or a block from the viewpoint of handleability. The molded article is more preferably in the shape of a block, further preferably in the shape of a block (bale) of 1,000 cm$^3$ or more, and still further preferably in the shape of a rectangular parallelepiped bale of 17.5 kg to 35 kg.

(Components of Crosslinking Rubber Composition)

The crosslinking rubber composition of the present embodiment contains the crosslinking agent (B).
In addition, if necessary, a hydrogenated resin (C), an additional rubber component, an extender oil, a filler, and a silane coupling agent can be contained therein.

(Crosslinking Agent (B))

Examples of the crosslinking agent (B) include a sulfur-based crosslinking agent, an organic peroxide-based crosslinking agent, an inorganic crosslinking agent, a polyamine crosslinking agent, a resin crosslinking agent, a sulfur compound-based crosslinking agent, and an oxime-nitrosamine-based crosslinking agent. One of these may be singly used, or two or more of these may be used together.
From the viewpoint of compression set resistance and less reduction in physical property over time, a sulfur-based crosslinking agent (vulcanizing agent) is more preferable, and sulfur is more preferable.
In this context, the sulfur refers to both powdered sulfur (soluble sulfur) and insoluble sulfur.
A content of the crosslinking agent (B) in the crosslinking rubber composition of the present embodiment is preferably 0.1 parts by mass or more and 20 parts by mass or less with respect to 100 parts by mass of a rubber component from the viewpoint of a tensile modulus.
The "rubber component" includes the above-described rubber-like polymer (A) and other rubber components.
The content of the crosslinking agent (B) is preferably 0.1 parts by mass or more, more preferably 0.5 parts by mass or more, and further preferably 1.5 parts by mass or more with respect to 100 parts by mass of the rubber component from the viewpoint of high tensile strength and a high crosslinking rate.
On the other hand, the content is preferably 20 parts by mass or less, more preferably 5 parts by mass or less, and further preferably 3 parts by mass or less from the viewpoint of inhibition of uneven crosslinking and high tensile strength.
When a sulfur-based crosslinking agent (vulcanizing agent) is used as the crosslinking agent (B), a vulcanization accelerator is preferably used together.
In particular, when the iodine value of the rubber-like polymer (A) is 200 (g/100 g) or less, a vulcanization accelerator is preferably used together.
From the viewpoints of a short crosslinking time of the crosslinking rubber composition and abrasion resistance, preferable examples of the vulcanization accelerator include, but are not limited to, guanidine-based, aldehyde-amine-based, aldehyde-ammonia-based, thiazole-based, sulfenamide-based, thiourea-based, thiuram-based, dithiocarbamate-based, and xanthate-based compounds. A guanidine-based vulcanization accelerator such as 1,3-diphenylguanidine, and a thiazole-based vulcanization accelerator such as 2-mercaptobenzothiazole, dibenzothiazole disulfide, N-cyclohexylbenzothiazole-2-sulfenamide, or N-tert-butylbenzothiazole-2-sulfenamide are more preferred.
One of these vulcanization accelerators may be singly used, or two or more of these may be used together.

(Hydrogenated Resin (C))

The crosslinking rubber composition of the present embodiment may contain a hydrogenated resin (C).
By containing the hydrogenated resin (C), the crosslinking rubber composition of the present embodiment can inhibit reduction in processability, inhibit reduction in tensile energy, and inhibit reduction in abrasion resistance.
The hydrogenated resin (C) is preferably a ring-containing resin (C), and more preferably a hydrogenated ring-containing resin having a softening point of less than 140°C.
Herein, the term "ring-containing resin (C)" refers to a resin having an aromatic ring and/or an aliphatic ring.
In general, in a rubber composition for a tire, a polymer that has an aromatic ring and/or an aliphatic ring, has a low molecular weight, and is in a glass state at room temperature is often referred to as a "resin" contained in the rubber composition. In the present embodiment as well, the resin is a preferable form of the hydrogenated resin (C).
A molecular weight of the hydrogenated resin (C) is preferably 300 or more from the viewpoint of high tensile energy of the crosslinking rubber composition of the present embodiment, and is preferably 2500 or less from the viewpoint of processability of the crosslinking rubber composition.

A glass transition temperature of the hydrogenated resin (C) is preferably 85°C or less, more preferably 80°C or less, and further preferably 75°C or less from the viewpoint of cut resistance in the form of a sheet of the crosslinking rubber composition of the present embodiment. On the other hand, the glass transition temperature is preferably 25°C or more, more preferably 40°C or more, further preferably 50°C, and still further preferably 110°C or more from the viewpoint of rigidity of the crosslinking rubber composition of the present embodiment and handleability in mixing of the crosslinking rubber composition.

Since the rubber-like polymer (A) having an iodine value of 10 to 250 (g/100 g) and containing 3% by mass or more of an ethylene structure and the hydrogenated resin (C) having a softening point of less than 140°C are easily kneaded and have high compatibility, the crosslinking rubber composition of the present embodiment tends to obtain good properties by using the resin (C).

The softening point of the hydrogenated resin (C) is more preferably 135°C or less, further preferably 130°C or less, and still further preferably 125°C or less from the viewpoint of cut resistance of a sheet using the crosslinking rubber composition of the present embodiment. On the other hand, the softening point is preferably 75°C or more, more preferably 90°C or more, further preferably 100°C, and still further preferably 110°C or more from the viewpoint of rigidity of the crosslinking rubber composition of the present embodiment and handleability in mixing of the crosslinking rubber composition.

The hydrogenated resin (C) is a resin in which an intramolecular unsaturated bond is partially or completely hydrogenated.

Specifically, the hydrogenated resin is a resin in which at least any unsaturated group selected from the group consisting of an aromatic ring such as a benzene ring, cyclopentadiene, dicyclopentadiene, and a terpene structure is partially or completely hydrogenated.

Examples of a hydrogenation method include a method of hydrogenating a resin having an intramolecular unsaturated bond using a hydrogenation catalyst consisting of organic nickel carboxylate, organic cobalt carboxylate, or an organic metal compound of groups 1 to 3; a metal catalyst of nickel, platinum, palladium, ruthenium, or rhodium supported on carbon, silica, or diatomaceous earth or the like; or one hydrogenation catalyst selected from cobalt, nickel, rhodium, and ruthenium complexes and the like under pressurized hydrogen of 1 to 100 atm.

The resin before the hydrogenation may be any natural resin or synthetic resin.

A commercially available product can be used as the hydrogenated resin (C). Examples of the commercially available product include, but are not limited to, trade names "I-MARV P100", "I-MARV P125", "I-MARV S100", and "I-MARV S110" manufactured by Idemitsu Kosan Co., Ltd. which are DCPD (dicyclopentadiene)/aromatic (C9) copolymer-based hydrogenated petroleum resins with a C5 fraction as a main raw material; trade names "Arkon P-90", "Arkon P-100", "Arkon P-115", "Arkon P-125", "Arkon M-90", "Arkon M-100", "Arkon M-115", and "Arkon M-135" (P denotes complete hydrogenation, and M denotes partial hydrogenation) manufactured by Arakawa Chemical Industries, Ltd. which are hydrogenated resins with a C9 fraction as a main raw material; trade names "T-REZ OP501", "T-REZ PR801", "T-REZ HA125", and "T-REZ HB125" manufactured by Tonen General Sekiyu K.K. which are DCPD (dicyclopentadiene)/aromatic (C9) copolymer-based hydrogenated petroleum resins; and CLEARON P105 manufactured by Yasuhara Chemical Co., Ltd., CLEARON P115 manufactured by Yasuhara Chemical Co., Ltd., CLEARON P125 manufactured by Yasuhara Chemical Co., Ltd., CLEARON P135 manufactured by Yasuhara Chemical Co., Ltd., CLEARON P150 (trade name; softening point: 152°C) manufactured by Yasuhara Chemical Co., Ltd., CLEARON M105 manufactured by Yasuhara Chemical Co., Ltd., CLEARON M115 manufactured by Yasuhara Chemical Co., Ltd., CLEARON K100 manufactured by Yasuhara Chemical Co., Ltd., CLEARON K110 manufactured by Yasuhara Chemical Co., Ltd., CLEARON K4100 manufactured by Yasuhara Chemical Co., Ltd., and CLEARON K4090 manufactured by Yasuhara Chemical Co., Ltd. as terpene-based hydrogenated resins.

Only one of these hydrogenated resins (C) may be singly used, or two or more of these may be used in combination.

(Additional Rubber Component)

The crosslinking rubber composition of the present embodiment can contain an additional rubber component in addition to the above-described rubber-like polymer (A).

The additional rubber component can be appropriately selected depending on purposes, and examples include, but are not limited to, a styrene-butadiene rubber (of emulsion polymerization type or solution polymerization type), a natural rubber, polyisoprene, a butadiene rubber (high cis polybutadiene, low cis polybutadiene, syndiotactic 1,2-polybutadiene, or an acrylonitrile-butadiene rubber (NBR)), a chloroprene rubber, an ethylene-α-olefin copolymer rubber such as an ethylene-propylene rubber, an ethylene-butene rubber, or ethylene-octene, an ethylene-propylene-diene rubber (EPDM), a butyl rubber, a polysulfide rubber, a silicone rubber, a fluororubber, and a urethane rubber.

One of these may be singly used, or a mixture of two or more of these may be used.

The additional rubber component may be mixed with the rubber-like polymer (A) in a dry state after the polymerization, or may be mixed with the rubber-like polymer (A) in a solution state during the polymerization.

(Content of Rubber-like Polymer (A) in Entire Rubber Component)

A content of the rubber-like polymer (A) with respect to an entire amount of the rubber component in the crosslinking rubber composition of the present embodiment is preferably 10% by mass or more, more preferably 30% by mass or more, and further preferably 60% by mass or more from the viewpoint of mechanical strength, fuel economy obtained in use in a tire member, ozone resistance, and storage stability. Specifically, the crosslinking rubber composition of the present embodiment contains 100 parts by mass of a rubber component containing preferably 10 parts by mass or more, more preferably 30 parts by mass or more, and further preferably 60 parts by mass or more of the rubber-like polymer (A).

In particular, in applications in a rubber composition for a tire, a tire sidewall, a tire gum chafer, or a tire steal belt coating rubber described below, the content of the rubber-like polymer (A) with respect to an entire amount of the rubber component is preferably 30% by mass or more.

(Average Iodine Value of Entire Rubber Component)

An average iodine value of the entire rubber component in the crosslinking rubber composition of the present embodiment is preferably 250 (g/100 g) or less, more preferably 200 (g/100 g) or less, further preferably 130 (g/100 g) or less, and still further preferably 70 (g/100 g) or less from the viewpoint of inhibiting uneven crosslinking and from the viewpoint of obtaining high mechanical strength.

(Additional Component of Crosslinking Rubber Composition)

<Extender Oil>

The crosslinking rubber composition of the present embodiment preferably contains an extender oil from the viewpoint of securing good moldability after kneading.

A content of the extender oil in the crosslinking rubber composition of the present embodiment is preferably 1 part by mass or more, and more preferably 3 parts by mass or more with respect to 100 parts by mass of the entire rubber component. When the content of the extender oil is 1 part by mass or more, processability of a compound is improved.

On the other hand, the content of the extender oil is preferably 50 parts by mass or less, more preferably 30 parts by mass or less, further preferably 10 parts by mass or less, and still further preferably 5 parts by mass or less with respect to 100 parts by mass of the rubber component. When the content of the extender oil is 50 parts by mass or less, abrasion resistance of the crosslinking rubber composition tends to be more improved.

Preferable examples of the extender oil include an aromatic oil, a naphthenic oil, and a paraffin oil. Among these, from the viewpoint of environmental safety, and from the viewpoints of oil bleed prevention and wet grip characteristics, an aroma substitute oil containing 3% by mass or less of a polycyclic aromatic (PCA) component in accordance with the IP 346 method is preferred.

Examples of the aroma substitute oil include, but are not limited to, TDAE (Treated Distillate Aromatic Extracts) and MES (Mild Extraction Solvate) described in Kautschuk Gummi Kunststoffe 52 (12) 799 (1999), and RAE (Residual Aromatic Extracts).

A plant oil may be used as the extender oil. Use of the plant oil as the extender oil can improve moldability after kneading while achieving friendliness to the environment, as compared with the case of using a synthetic oil or a mineral oil as the extender oil.

Examples of the plant oil include, but are not limited to, flaxseed oil, safflower oil, soybean oil, corn oil, cottonseed oil, turnip seed oil, castor oil, tung oil, pine oil, sunflower oil, palm oil, olive oil, coconut oil, peanut oil, and grapeseed oil. In particular, sunflower oil is preferable. One of these plant oils may be singly used, or two or more of these may be used together.

<Filler>

The crosslinking rubber composition of the present embodiment can employ a filler from the viewpoint of improvement of a reinforcing property.

A content of the filler in the crosslinking rubber composition of the present embodiment can be appropriately selected depending on purposes, and is preferably more than 30 parts by mass, more preferably more than 50 parts by mass, further preferably more than 60 parts by mass, and still further preferably more than 70 parts by mass with respect to 100 parts by mass of the rubber component from the viewpoint of a reinforcing property. On the other hand, the content is preferably 130 parts by mass or less, and more preferably 120 parts by mass or less from the viewpoint of processability of the crosslinking rubber composition.

Examples of the filler include, but are not limited to, carbon black, silica, aluminum hydroxide, clay, alumina, talc, mica, kaolin, glass balloon, glass bead, calcium carbonate, magnesium carbonate, magnesium hydroxide, magnesium oxide, titanium oxide, potassium titanate, and barium sulfate. Among these, carbon black is preferable.

One of these may be singly used, or two or more of these may be used together.

The carbon black can be appropriately selected depending on purposes, and examples include SRF, GPF, FEF, HAF, ISAF, and SAF. One of these may be singly used, or two or more of these may be used together.

A nitrogen adsorption specific surface area ($N_2SA$, measured in accordance with JIS K 6217-2: 2001) of the carbon black can be appropriately selected depending on purposes.

Among the above-described fillers, from the viewpoint of improvement of a reinforcing property of the crosslinking rubber composition of the present embodiment, carbon black is preferable, and from the viewpoint of improvement of fuel economy obtained when the crosslinking rubber composition is used in a tire member, carbon black and silica are preferably used together.

When silica is used as the filler, a content of the silica in the crosslinking rubber composition of the present embodiment is, from the viewpoints of achieving both improvement of fuel economy and tensile strength, preferably 10 to 50 parts by mass, more preferably 20 to 40 parts by mass, and further preferably 25 to 35 parts by mass, with respect to 100 parts by mass of the rubber component.

A nitrogen adsorption specific surface area (BET specific surface area) of the carbon black used in the crosslinking rubber composition of the present embodiment is preferably 20 $m^2$/g or more, more preferably 30 $m^2$/g or more, further preferably 40 $m^2$/g or more, and still further preferably 50 $m^2$/g or more.

When the nitrogen adsorption specific surface area of the carbon black is 20 $m^2$/g or more, a good reinforcing effect is obtained, and excellent rubber break strength and steering stability are obtained. When the nitrogen adsorption specific surface area is 30 $m^2$/g or more, a sufficient reinforcing effect is obtained, and sufficient rubber break strength and steering stability are obtained.

The nitrogen adsorption specific surface area (BET specific surface area) of the carbon black is preferably 150 $m^2$/g or less, more preferably 130 $m^2$/g or less, and further preferably 120 $m^2$/g or less. When the nitrogen adsorption specific surface area is 150 $m^2$/g or less, good low fuel consumption is obtained.

A nitrogen adsorption specific surface area (BET specific surface area) of the silica-based inorganic filler used in the crosslinking rubber composition of the present embodiment is preferably 110 $m^2$/g or more, more preferably 130 $m^2$/g or more, and further preferably 150 $m^2$/g or more.

When the nitrogen adsorption specific surface area of the silica-based inorganic filler is 110 $m^2$/g or more, a sufficient reinforcing effect is obtained, and sufficient rubber break strength and steering stability are obtained. The nitrogen adsorption specific surface area (BET specific surface area) is preferably 220 $m^2$/g or less, more preferably 200 $m^2$/g or less, and further preferably 180 $m^2$/g or less. When the nitrogen adsorption specific surface area is 220 $m^2$/g or less, good low fuel consumption is obtained.

The silica-based inorganic filler is not especially limited and is preferably, for example, a solid particle containing $SiO_2$ or $Si_3Al$ as a constituent unit, and more preferably a solid particle containing $SiO_2$ or $Si_3Al$ as a principal component of a constituent unit.

In this context, the principal component refers to a component that is contained at 50% by mass or more, preferably 70% by mass or more, and more preferably 80% by mass or more in the silica-based inorganic fillers.

Examples of the silica-based inorganic filler include, but are not limited to, silica, clay, talc, mica, diatomaceous earth, wollastonite, montmorillonite, zeolite, and inorganic fibrous substances such as glass fiber.

Examples of the commercially available product of the silica-based inorganic filler include trade name "Ultrasil 7000GR" manufactured by Evonik Degussa.

A silica-based inorganic filler having a hydrophobized surface or a mixture of the silica-based inorganic filler and a non-silica-based inorganic filler can also be used as the silica-based inorganic filler.

Among these, from the viewpoint of strength and abrasion resistance, silica and glass fiber are preferable, and silica is more preferable. Examples of the silica include dry silica, wet silica, and synthetic silica silicate. Among these, from the viewpoint of being excellent in balance between the effect of improving break characteristics and wet skit resistance, wet silica is further preferable.

The nitrogen adsorption specific surface area ($N_2SA$) can be measured in accordance with JIS K 6217-2: 2001.

<Silane Coupling Agent>

The crosslinking rubber composition of the present embodiment preferably contains a silane coupling agent from the viewpoint of improvement of dispersibility of the filler and tensile strength of a crosslinked product.

The silane coupling agent has a function to make close the interaction between the rubber component and the inorganic filler, and therefore, is preferably a compound that has a group having affinity with or a binding property to each of the rubber component and the filler, and contains, in one molecule, a sulfur bond portion and an alkoxysilyl group or silanol group portion.

Examples of such a compound include, but are not limited to, bis-[3-(triethoxysilyl)-propyl]-tetrasulfide, bis-[3-(triethoxysilyl)-propyl]-disulfide, bis-[2-(triethoxysilyl)-ethyl]-tetrasulfide, S-[3-(triethoxysilyl)-propyl]octanethioate, a condensate of S-[3-(triethoxysilyl)-propyl]octanethioate and [(triethoxysilyl)-propyl]thiol, and a silane carrying at least one thiol (-SH) functional group (referred to as mercaptosilane) and/or at least one masked thiol group.

A content of the silane coupling agent in the crosslinking rubber composition of the present embodiment is preferably 0.1 parts by mass or more and 30 parts by mass or less, more preferably 0.5 parts by mass or more and 20 parts by mass or less, and further preferably 1.0 parts by mass or more and 10 parts by mass or less with respect to 100 parts by mass of the filler. When the content of the silane coupling agent falls in this range, there is a tendency that the effect resulting from the addition of the silane coupling agent can be further remarkably exhibited.

<Additional Additives>

In the crosslinking rubber composition of the present embodiment, in addition to the above-described various components, various additives such as an additional softener, a filler, a heat stabilizer, an antistatic agent, a weathering stabilizer, an anti-aging agent, a colorant, and a lubricant may be used.

As the additional softener, any of known softeners can be used.

Examples of the additional filler include calcium carbonate, magnesium carbonate, aluminum sulfate, and barium sulfate.

As the heat stabilizer, the antistatic agent, the weathering stabilizer, the anti-aging agent, the colorant, and the lubricant, any of known materials can be respectively used.

[Method for Producing Crosslinking Rubber Composition]

The crosslinking rubber composition of the present embodiment can be obtained by mixing the rubber-like polymer (A), the crosslinking agent (B), and if necessary, the hydrogenated resin (C), an additional rubber component, an extender oil, a silica-based inorganic filler, carbon black or an additional filler, a silane coupling agent, and various additives such as a rubber softener.

Examples of a mixing method include, but are not limited to, a melt kneading method using a general mixer such as an open roll, a Banbury mixer, a kneader, a single screw extruder, a double screw extruder, or a multi-screw extruder, and a method in which the respective components are dissolved to be mixed, and then a solvent is removed by heating.

Among these methods, a melt kneading method using a roll, a Banbury mixer, a kneader or an extruder is preferred from the viewpoints of productivity and good kneadability.

Either of a method in which the rubber component, the additional filler, the silane coupling agent and the additive are kneaded all at once, and a method in which these are mixed dividedly plural times can be employed.

[Rubber Composition for Tire]

A rubber composition for a tire of the present embodiment contains: 100 parts by mass of a rubber component containing 30 parts by mass or more of a natural rubber and 10 parts by mass or more of the rubber-like polymer (A); and the crosslinking agent (B).

A content of the rubber-like polymer (A) is preferably 30 parts by mass or more, and more preferably 60 parts by mass or more in 100 parts by mass of the rubber component.

A rubber composition for a tire that has good processability in kneading and is excellent in balance among physical properties can thereby be obtained.

An application of the rubber composition for the tire of the present embodiment is a member constituting a tire, and examples include a tire member such as a tire sidewall, a gum chafer, a steal belt coating, and a bead filler. The rubber composition for the tire of the present embodiment is appropriately molded depending on applications. The rubber composition for the tire is molded, for example, in the shape of a sheet, or integrally molded so as to cover a cord or a belt.

The rubber composition for the tire of the present embodiment preferably further contains carbon black having a nitrogen adsorption specific surface area ($N_2SA$) of 20 to 150 $m^2/g$ and/or a silica-based inorganic filler having a nitrogen adsorption specific surface area ($N_2SA$) of 110 to 220 $m^2/g$.

A rubber composition for a tire excellent in fuel economy, tensile strength, and resistance to ozone degradation (ozone resistance) can thereby be obtained.

A content of the carbon black having a nitrogen adsorption specific surface area ($N_2SA$) of 20 to 150 $m^2/g$

and/or the silica-based inorganic filler having a nitrogen adsorption specific surface area ($N_2SA$) of 110 to 220 m$^2$/g is, from the viewpoint of processability and balance among physical properties, preferably 30 parts by mass or more, more preferably 40 parts by mass or more, and further preferably 50 parts by mass or more with respect to 100 parts by mass of the rubber component containing 30 parts by mass or more of a natural rubber and 10 parts by mass or more of the rubber-like polymer (A) described above. The upper limit of the content of the carbon black and/or the silica-based inorganic filler is preferably 90 parts by mass or less, more preferably 80 parts by mass or less, and further preferably 70 parts by mass or less.

When the content of the rubber-like polymer (A) in 100 parts by mass of the rubber component is 10 parts by mass or more as described above, 30 parts by mass or more of the carbon black and/or the silica-based inorganic filler may also be contained. Since the rubber-like polymer (A) has a modifying group and also has high affinity for the hydrophilic carbon black and/or silica-based inorganic filler, a larger content of the rubber-like polymer (A) or a higher modification ratio of the rubber-like polymer (A) is more preferable from the viewpoint of dispersibility of the carbon black and/or the silica-based inorganic filler. In the rubber composition containing the carbon black and/or the silica-based inorganic filler, the content of the rubber-like polymer (A) in 100 parts by mass of the rubber component is preferably 30 parts by mass or more for increasing the content of the rubber-like polymer (A) and improving dispersibility of the filler. In this composition, the upper limit of the content of the carbon black and/or the silica-based inorganic filler is preferably 100 parts by mass or less, and more preferably 90 parts by mass or less, though depending on a functional group contained in the rubber-like polymer (A) or a modification ratio.

[Molded Article for Tire Sidewall]

A molded article for a tire sidewall of the present embodiment contains the above-described crosslinking rubber composition of the present embodiment, and is a molded article of the composition containing: 100 parts by mass of a rubber component containing 30 parts by mass or more of a natural rubber and 10 parts by mass or more of the above-described rubber-like polymer (A); and 30 to 70 parts by mass of carbon black having a nitrogen adsorption specific surface area ($N_2SA$) of 20 to 150 m$^2$/g and/or a silica-based inorganic filler having a nitrogen adsorption specific surface area ($N_2SA$) of 110 to 220 m$^2$/g, and further containing the above-described crosslinking agent (B).

The molded article for the tire sidewall of the present embodiment is generally a molded article in the shape of a sheet. The molded article for the tire sidewall is laminated with sheet-shaped molded articles for forming other portions other than the tire sidewall, molded in the shape of a tire, and then crosslinked. A compositional ratio of the rubber component in the molded article for the sidewall can be appropriately set depending on desired performance of the sidewall. For example, for the purpose of increasing dispersibility and ozone resistance of the silica-based inorganic filler, the composition in 100 parts by mass of the rubber component is set so as to include 30 parts by mass or more of a natural rubber and 10 parts by mass or more of the above-described rubber-like polymer (A) in a preferable aspect.

In particular, fuel economy, tensile strength, and resistance to ozone degradation (ozone resistance) are important as performance required for the molded article for the tire sidewall.

Since the rubber-like polymer (A) is, as described above, a polymer having a prescribed iodine value (10 to 250 (g/100 g)), by blending the rubber-like polymer (A), a crosslinked product forms a homogeneous structure so that tensile strength is improved. Furthermore, the rubber-like polymer (A) is insusceptible to attack by ozone due to fewer double bonds, and resistance to ozone degradation can be improved. As for fuel economy, by blending the rubber-like polymer (A), G'' does not become so high, though G' is a high numeral, in tanδ, rubber pyrogenicity index = G''/G' = loss modulus/storage modulus; hence, it is presumed that the value of tan6 is low, i.e., low pyrogenicity and excellent fuel economy are obtained.

The storage modulus G' is a high numeral presumably because hydrogenation of the rubber-like polymer (A) decreases an entanglement molecular weight and increases interpolymer entanglement.

The crosslinking rubber composition of the present embodiment containing a natural rubber is preferable in terms of balance between tensile strength and low pyrogenicity and processability, and on the other hand, tends to be inferior in weather resistance.

Since a conjugated diene-based polymer such as a butadiene rubber is excellent in flex resistance and has low pyrogenicity, the conjugated diene-based polymer is suitable for use in a sidewall, but is inferior in break strength to a natural rubber. Accordingly, the butadiene rubber and the natural rubber are preferably used together for achieving all properties of flex resistance, low pyrogenicity, and break strength.

When natural rubber/rubber-like polymer (A) is 30/70 to 70/30, various physical properties including weather resistance become practically sufficient values in the molded article for the tire sidewall, and contents and physical properties can be controlled depending on applications. The ratio between the natural rubber and the rubber-like polymer (A) may appropriately vary in composition depending on their respective costs or the like.

When the content of the natural rubber in the rubber composition constituting the molded article for the tire sidewall of the present embodiment is set to 30 parts by mass or more with respect to 100 parts by mass of the entire rubber component, there is a tendency that processability in kneading can be improved and balance among physical properties can be improved.

[Sheet]

A sheet of the present embodiment contains the above-described crosslinking rubber composition of the present embodiment.

The sheet of the present embodiment preferably contains 100 parts by mass of a rubber component containing 30 parts by mass or more of a natural rubber, 10 parts by mass or more of a butadiene rubber, and 10 parts by mass or more of the rubber-like polymer (A).

A content of the rubber-like polymer (A) in 100 parts by mass of the rubber component is more preferably 20 parts by mass or more, and further preferably 30 parts by mass or more from the viewpoint of fuel economy.

The rubber-like polymer (A) contained in the sheet of the present embodiment preferably has a glass transition temperature of -60°C or less and a weight average molecular weight of 200,000 or more.

Owing to this configuration, the sheet of the present embodiment has high mechanical strength, high fuel economy, and high ozone resistance.

Examples of an application of the sheet of the present embodiment include a member constituting a tire, and the sheet of the present embodiment can be used for producing a tire member such as a tire sidewall. A blending ratio of the rubber component and types and amounts of a filler and an additive can be appropriately adjusted depending on a function required for a member using the sheet of the present embodiment.

A width and a thickness of the sheet of the present embodiment can be appropriately adjusted depending on an applied member and a size of a finally obtained tire, and the thickness is generally on the order of 0.5 to 3 cm. The width is on the order of 0.5 to 1.0 times the size of the tire, and a sheet having a width on the order of 15 to 300 mm is preferable for, for example, a car, though depending on the shape of the tire.

The sheet of the present embodiment preferably further contains carbon black having a nitrogen adsorption specific surface area ($N_2SA$) of 20 to 150 $m^2$/g and/or a silica-based inorganic filler having a nitrogen adsorption specific surface area ($N_2SA$) of 110 to 220 $m^2$/g.

A content of the carbon black having a nitrogen adsorption specific surface area ($N_2SA$) of 20 to 150 $m^2$/g and/or the silica-based inorganic filler having a nitrogen adsorption specific surface area ($N_2SA$) of 110 to 220 $m^2$/g is preferably 50 parts by mass or more and 90 parts by mass or less, more preferably 50 parts by mass or more and 85 parts by mass or less, and further preferably 50 parts by mass or more and 80 parts by mass or less with respect to 100 parts by mass of the rubber component containing 30 parts by mass or more of a natural rubber, 10 parts by mass or more of a butadiene rubber, and 10 parts by mass or more of the rubber-like polymer (A).

A sheet excellent in fuel economy and tensile strength can thereby be obtained.

When the rubber-like polymer (A) is mixed with the natural rubber and the butadiene rubber in a production process of the sheet of the present embodiment, good compatibility among these rubbers is very important. In a general tire production process, raw materials constituting a rubber composition tend to be kneaded, molded in the shape of a sheet, and then stored for a prescribed time until vulcanization molding. If the compatibility among the rubbers is poor, physical properties, such as tensile characteristics, of the molded article after the vulcanization tend to be changed during this storage. This is probably because phase separation occurs in the rubber composition during the storage, or change occurs in a phase structure or dispersibility of a filler, whereby a point of stress concentration is generated in the molded article after the vulcanization. Specifically, on the premise of the production process of storing a molded sheet for a prescribed period, followed by vulcanization and crosslinking, it is necessary for exerting intended performance of each member of a tire to sufficiently secure compatibility among the rubbers constituting the rubber composition.

From such a viewpoint, the rubber-like polymer (A) preferably has good compatibility both with the natural rubber and with the butadiene rubber. Specifically, the rubber-like polymer (A) preferably has a glass transition temperature of -60°C or less. The compatibility both with the natural rubber having a glass transition temperature of generally -50°C to -70°C and with the butadiene rubber having a glass transition temperature of -110°C to -90°C is thereby excellent, and the rubber composition tends to be excellent in stability over time during storage.

The compatibility of the rubber-like polymer (A) with the natural rubber and the butadiene rubber correlates with a SP value and the glass transition temperature Tg of the rubber-like polymer (A).

The SP value and the glass transition temperature Tg of the rubber-like polymer (A) can be controlled by adjusting a 1,2-vinyl bond content of the rubber-like polymer (A), an amount of a vinyl aromatic monomer unit, or a hydrogenation rate.

From the viewpoint of improving compatibility in the 3-component system of the specific natural rubber and butadiene rubber and the rubber-like polymer (A), the relationship between the SP value and the Tg to be satisfied by the rubber-like polymer (A) was experimentally determined, resulting in finding that the rubber-like polymer having the SP value and the glass transition temperature Tg that satisfy the following expression (1) tends to be compatible both with the natural rubber and with the butadiene rubber:

```
Expression (1):

(-0.03Tg + 14.4) < SP value < (-0.03Tg + 15.4)
```

In the expression (1), the SP value of the rubber-like polymer (A) is calculated according to the expression: (SP value) = ((Molar cohesive energy) / (Molar volume))$^{1/2}$.

When the rubber-like polymer (A) is constituted by two or more types of different components, an additive property holds in the molar cohesive energy. Hence, the molar cohesive energy of the rubber-like polymer (A) is calculated as an average value of the molar cohesive energy based on a content percentage (% by mol) of each component (an average value apportioned depending on the content percentage). An additive property also holds in the molar volume, as in the molar cohesive energy, and the molar volume of the rubber-like polymer (A) is calculated as an average value of the molar volume based on a content percentage (% by mol) of each component (an average value apportioned depending on the content percentage).

The two or more types of different components are not especially limited, and examples include a conjugated diene monomer unit incorporated in each manner of an unhydrogenated 1,2-bond, a 1,2-bond after hydrogenation, an unhydrogenated 3,4-bond, a 3,4-bond after hydrogenation, an unhydrogenated 1,4-bond, and a 1,4-bond after hydrogenation, and a vinyl aromatic monomer unit.

Respective amounts of the conjugated diene monomer unit incorporated in each manner and the vinyl aromatic monomer unit can be measured by NMR or the like.

Molar volumes and molar cohesive energy of the conjugated diene monomer unit incorporated in each binding manner of an unhydrogenated 1,2-bond, a 1,2-bond after hydrogenation, an unhydrogenated 3,4-bond, a 3,4-bond after hydrogenation, an unhydrogenated 1,4-bond, and a 1,4-bond after hydrogenation, the vinyl aromatic monomer unit, and other monomer units can be determined in accordance with a method (Bicerano method) described in J. Bicerano, Prediction of Polymer Properties, 3rd Ed. Marcel Dekker, 2002.

The SP value of the rubber-like polymer (A) can be controlled to fall in a numerical range that satisfies the expression (1) by controlling a 1,2-vinyl bond content of the conjugated diene monomer unit, a content of the vinyl aromatic monomer unit, and a hydrogenation rate. For example, when the rubber-like polymer (A) is a hydrogenation product of a copolymer of styrene and butadiene, the SP value of the rubber-like polymer (A) can be decreased by decreasing the content of styrene, and/or increasing the 1,2-vinyl bond content of the butadiene monomer unit, and/or increasing the hydrogenation rate. Although a fluctuation range of the SP value obtained when respective structural factors are changed depends on the structure, for example, the SP value is decreased by approximately 0.20 to 0.25 when only the amount of styrene is decreased by 10% by mass with the other factors fixed, is decreased by approximately 0.025 to 0.050 when only the 1,2-vinyl bond content of the butadiene monomer unit is increased by 10% by mol, and is decreased by approximately 0.05 to 0.10 when the hydrogenation rate is increased by 10% by mol. On the contrary, the SP value can be increased in the same fluctuation range as above by increasing the amount of styrene, and/or decreasing the 1,2-vinyl bond content of the butadiene monomer unit, and/or decreasing the hydrogenation rate.

In the rubber-like polymer (A), the SP value as well as the glass transition temperature Tg is changed by controlling the 1,2-vinyl bond content of the conjugated diene monomer unit, the content of the vinyl aromatic monomer unit, and the hydrogenation rate. It is preferable for satisfying the expression (1) by these, for example, when the rubber-like polymer (A) is a hydrogenation product of a copolymer of styrene and butadiene, to set the amount of styrene to 20% by mass or less. As the amount of styrene is higher, an amount of 1,2-vinyl needs to be lower as the structure of the rubber-like polymer (A) for satisfying the expression (1). If the content of styrene exceeds 20% by mass, it tends to be difficult to control the structure of the rubber-like polymer (A) so as to satisfy the expression (1).

As for a specific rubber component in the sheet of the present embodiment, when RSS #3 is used as the natural rubber and high cis polybutadiene is used as the butadiene rubber, the expression (1) can specify the structure of the rubber-like polymer (A) having physical properties in ranges close to the Tg and the SP value of each rubber component.

Specifically, the coefficient -0.03 in the expression (1) corresponds to a slope of a straight line drawn to connect the natural rubber and the butadiene rubber when their Tg and SP values are set to -62°C and 16.7 for the natural rubber (RSS) and -95°C and 17.7 for the butadiene rubber (high cis polybutadiene). When the intercept in the expression (1) falls in the range in the expression (1), properties of both the natural rubber (RSS #3) and the butadiene rubber (high cis polybutadiene) can be included.

When the Tg and the SP value of the rubber-like polymer (A) satisfy the expression (1), its properties are closer to those of the natural rubber and the butadiene rubber, and the compatibility is much better.

Since the great majority of natural rubbers consist of 1,4-cis polyisoprene, generally distributed natural rubbers do not largely differ in Tg and SP value. Therefore, any natural rubber selected tends to exhibit good compatibility with the rubber-like polymer (A) that satisfies the expression (1).

On the other hand, polybutadiene differs in Tg and SP value depending on binding manners (cis form and trans form) of butadiene, and low-cis polybutadiene having a low 1,4-cis content is also commercially available. The Tg and the SP value of polybutadiene, though depending on structures, are on the order of -90°C and 17.6, for example, in the case of a cis content as low as a 1,2-vinyl bond content of approximately 15% by mol, and this polybutadiene exhibits good compatibility with the rubber-like polymer (A) that satisfies the expression (1).

A content of the rubber-like polymer (A) in the sheet of the present embodiment is preferably 10 parts by mass or more, more preferably 20 parts by mass or more, and further preferably 30 parts by mass or more with respect to 100 parts by mass of the rubber component containing the rubber-like polymer (A). When the content of the rubber-like polymer (A) is 10 parts by mass or more, a sheet excellent in fuel economy tends to be obtained.

The content of the rubber-like polymer (A) is preferably 60 parts by mass or less, more preferably 55 parts by mass or less, and further preferably 50 parts by mass or less with respect to 100 parts by mass of the rubber component. When the content of the rubber-like polymer (A) is 60 parts by mass or less with respect to 100 parts by mass of the rubber component and the blending ratio of the natural rubber is increased, a sheet excellent in mechanical strength tends to be obtained.

The sheet of the present embodiment may contain an additional component in addition to the crosslinking rubber composition of the present embodiment. The ratio of the component or an additive can be appropriately set depending on applications, and more specifically, can be set to fall in a preferable range in each application described below.

[Tire Sidewall]

The above-described sheet of the present embodiment can be used in a tire sidewall.

A tire sidewall of the present embodiment contains: 10 parts by mass or more of a rubber-like polymer (A) having an iodine value of 10 to 250 (g/100 g), containing 3% by mass or more of an ethylene structure and less than 10% by mass of a vinyl aromatic monomer block, containing a nitrogen atom, having a modification ratio measured by column adsorption GPC of 40% by mass or more, having a glass transition temperature of -60°C or less, and having a weight average molecular weight of 200,000 or more; 30 parts by mass or more of a natural rubber; and 10 parts by mass or more of a butadiene rubber, wherein the tire sidewall has a structure where the rubber-like polymer (A), the natural rubber, and the butadiene rubber are crosslinked.

Owing to this configuration, a tire sidewall having high mechanical strength, high fuel economy, and high ozone resistance can be obtained.

In the tire sidewall of the present embodiment, an SP value and the glass transition temperature Tg of the rubber-like polymer (A) preferably satisfy the following expression (1):

```
Expression (1):

(-0.03 × Tg + 14.4) < SP value < (-0.03 × Tg + 15.4).
```

By satisfying the expression (1), when the tire sidewall of the present embodiment contains a rubber component containing the rubber-like polymer, a natural rubber, and a butadiene rubber, the rubber-like polymer (A) has excellent compatibility with the natural rubber and the butadiene rubber, and a tire sidewall excellent in storage stability can be obtained.

The tire sidewall of the present embodiment preferably contains carbon black having a nitrogen adsorption specific surface area ($N_2SA$) of 20 to 150 $m^2$/g and/or a silica-based inorganic filler having a nitrogen adsorption specific surface area ($N_2SA$) of 110 to 220 $m^2$/g.

The tire sidewall of the present embodiment preferably contains 50 to 90 parts by mass of the carbon black and/or the silica-based inorganic filler with respect to 100 parts by mass of the rubber component containing 10 parts by mass or more of the rubber-like polymer (A), 30 parts by mass or more of the natural rubber, and 10 parts by mass or more of the butadiene rubber, and the crosslinking agent (B).

A sheet excellent in fuel economy and tensile strength can thereby be obtained.

(Method for Producing Tire Sidewall)

A method for producing the tire sidewall of the present embodiment has steps of kneading the crosslinking rubber composition of the present embodiment, a natural rubber, and a butadiene rubber, obtaining a molded article in the shape of a sheet, and crosslinking the molded article in the shape of a sheet. In the molded article in the shape of a sheet, 30 parts by mass or more of the natural rubber, 10 parts by mass or more of the butadiene rubber, and 10 parts by mass or more of the rubber-like polymer (A) are contained in 100 parts by mass of a rubber component.

[Tire Gum Chafer]

When the sheet of the present embodiment is used in a tire gum chafer, the sheet of the present embodiment contains 100 parts by mass of a rubber component containing 40 parts by mass or more of a natural rubber and 30 parts by mass or more of the rubber-like polymer (A), and 50 to 90 parts by mass of carbon black having a nitrogen adsorption specific surface area ($N_2SA$) of 20 to 150 $m^2/g$ and/or a silica-based inorganic filler having a nitrogen adsorption specific surface area ($N_2SA$) of 110 to 220 $m^2/g$, and preferably further contains the above-described crosslinking agent (B).

Performance required for the tire gum chafer and blending conditions are common to the above-described tire sidewall. In particular, fuel economy and tensile strength are emphasized. Higher tensile strength than that of the tire sidewall is demanded, particularly, from properties of a member.

As described above, since the rubber-like polymer (A) is a polymer having a prescribed iodine value (10 to 250 (g/100 g)), a crosslinked product forms a homogeneous structure, and tensile strength is improved. The tire gum chafer has a larger filler content than that of the tire sidewall because of the features of a member, and tends to require blending a larger amount of the natural rubber than that of the tire sidewall for ensuring good kneading processability. From such a viewpoint, when the content of the natural rubber is 40 parts by mass or more with respect to 100 parts by mass of the entire rubber component, there is a tendency that balance among physical properties can be good while good processability in kneading is ensured.

[Tire Steal Belt Coating Rubber]

When the sheet of the present embodiment is used in a tire steal belt coating rubber, the sheet of the present embodiment contains 100 parts by mass of a rubber component containing 30 parts by mass or more of a natural rubber and 30 parts by mass or more of the rubber-like polymer (A), and 40 to 80 parts by mass of carbon black having a nitrogen adsorption specific surface area ($N_2SA$) of 20 to 150 $m^2/g$ and/or a silica-based inorganic filler having a nitrogen adsorption specific surface area ($N_2SA$) of 110 to 220 $m^2/g$, and preferably further contains the above-described crosslinking agent (B).

Performance required for the tire steal belt coating rubber and blending conditions are common to the above-described tire sidewall. Fuel economy and tensile strength are more emphasized. The tire steal belt coating rubber is required to have higher tensile strength than that of the tire sidewall and to have lower pyrogenicity (higher fuel economy) from properties of a member.

As described above, since the rubber-like polymer (A) is a polymer having a prescribed iodine value (10 to 250 (g/100 g)), it can be expected that a crosslinked product forms a homogeneous structure, and tensile strength is improved.

The tire steal belt coating rubber is also required to be excellent in adhesiveness as another feature. Hence, the natural rubber excellent in adhesiveness to a metal needs to be contained. When 30 parts by mass or more of the natural rubber are blended with respect to 100 parts by mass of the entire rubber component, there is a tendency that the adhesiveness to a metal is excellent, and balance among physical properties is also good.

[Tire Bead Filler]

When the sheet of the present embodiment is used in a tire bead filler, the sheet of the present embodiment contains 100 parts by mass of a rubber component containing 40 parts by mass or more of a natural rubber and 30 parts by mass or more of the rubber-like polymer (A), and 50 to 90 parts by mass of carbon black having a nitrogen adsorption specific surface area ($N_2SA$) of 20 to 150 $m^2/g$ and/or a silica-based inorganic filler having a nitrogen adsorption specific surface area ($N_2SA$) of 110 to 220 $m^2/g$, and preferably further contains the above-described crosslinking agent (B).

Performance required for the tire bead filler and blending conditions are common to the above-described tire sidewall. In particular, fuel economy and tensile strength are emphasized. The tire bead filler is required to have higher tensile strength than that of the tire sidewall from properties of a member.

As described above, since the rubber-like polymer (A) is a polymer having a prescribed iodine value (10 to 250 (g/100 g)), a crosslinked product forms a homogeneous structure, and tensile strength is improved.

The tire bead filler needs to have a larger filler content than that of the tire sidewall because of the features of a member, and often contains, in particular, a thermosetting resin and a curing agent, in order to attain higher hardness. Hence, the tire bead filler tends to require containing a larger amount of the natural rubber than that of the tire sidewall for ensuring good kneading processability. Specifically, when the content of the natural rubber is 40 parts by mass or more with respect to 100 parts by mass of the entire rubber component, there is a tendency that balance among physical properties can be good while good processability in kneading is ensured.

[Application]

The crosslinking rubber composition of the present embodiment is suitable as a material of various tire members as described above, and in addition, is applicable to a material of interiors and exteriors of vehicles, anti-vibration rubbers, belts, shoes (in particular, outsoles and midsoles), foam materials, various industrial products.

Among these, the crosslinking rubber composition is suitably used as a material of tire members.

As the tire members, the crosslinking rubber composition can be used in each site of a tire, such as a tread, a carcass, a sidewall, a bead portion and the like of various tires such as a fuel efficient tire, an allseason tire, a high performance tire, a snow tire, and a studless tire. In particular, the crosslinking rubber composition of the present embodiment is excellent in low fuel consumption and tensile strength obtained in the form of a vulcanizate, and therefore, is suitably used for a sidewall, a gum chafer, a steal belt coating rubber, and a bead filler.

As a method for producing a tire, any of routine methods can be employed. For example, members selected from the group consisting of a crosslinking rubber composition before vulcanization and a tire cord and usually used for production of a tire, such as a carcass layer, a belt layer, and a tread layer are successively overlayed on a tire forming drum to adhere these to one another, and the drum is pulled out to obtain a green tire. Subsequently, the green tire is vulcanized by heating by an ordinary method, and thus, a desired tire (such as a pneumatic tire) can be produced.

Examples

The present embodiment will now be described in more detail with reference to specific Examples and Comparative Examples, and it is noted that the present embodiment is not limited to the following Examples and Comparative Examples at all.

Various physical properties of the Examples and Comparative Examples were measured by the following methods.

((Physical Property 1) Molecular Weight and Molecular Weight Distribution)

<Measurement Conditions 1>:

A rubber-like polymer was used as a sample to measure, under [measurement conditions] described below, a chromatogram with a GPC measuring apparatus (trade name "HLC-8320 GPC" manufactured by Tosoh Corporation) including a series of three columns using a polystyrene-based gel as a filler and an RI detector (trade name "HLC 8020" manufactured by Tosoh Corporation), and based on a calibration curve obtained using standard polystyrene, a weight average molecular weight (Mw), a number average molecular weight (Mn) and a molecular weight distribution (Mw/Mn) were obtained.

[Measurement Conditions]

GPC measuring apparatus: trade name "HLC-8320 GPC" manufactured by Tosoh Corporation
Eluent: THF (tetrahydrofuran) containing 5 mmol/L of triethylamine
Guard column: "TSKguardcolumn Super MP(HZ)-H" manufactured by Tosoh Corporation
Column: series of three columns "TSKgel Super Multipore Hz-H" manufactured by Tosoh Corporation
Oven temperature: 40°C
Flow rate: 0.35 mL/min
Sample: A measurement solution was prepared by dissolving 10 mg of a measurement sample in 10 mL of THF, and 10 $\mu$L of the measurement solution was injected into the GPC measuring apparatus and measured.

Among various samples measured under <Measurement Conditions 1> described above, a sample found to have a value of the molecular weight distribution (Mw/Mn) less than 1.6 was subjected again to the measurement under <Measurement Conditions 2> described below, and the thus obtained measurement values were used. For a sample having been subjected to the measurement under <Measurement Conditions 1> and found to have a value of the molecular weight distribution of 1.6 or more, measurement values obtained by the measurement under <Measurement Conditions 1> were used.

<Measurement Conditions 2>:

A rubber-like polymer was used as a sample to measure, under [measurement conditions] described below, a chromatogram with a GPC measuring apparatus (trade name "HLC-8320 GPC" manufactured by Tosoh Corporation) including a series of three columns using a polystyrene-based gel as a filler and an RI detector (trade name "HLC 8020" manufactured by Tosoh Corporation), and based on a calibration curve obtained using standard polystyrene, a weight average molecular weight (Mw), a number average molecular weight (Mn) and a molecular weight distribution (Mw/Mn) were obtained.

[Measurement Conditions]

GPC measurement apparatus: Trade name "HLC-8320GPC" manufactured by Tosoh Corporation
Eluent: THF containing 5 mmol/L of triethylamine
Guard column: "TSKguardcolumn Super H-H" manufactured by Tosoh Corporation
Column: "TSKgel Super H5000", "TSKgel Super H6000" and "TSKgel Super H7000" all manufactured by Tosoh Corporation connected in series in the stated order from the upstream side
Oven temperature: 40°C
Flow rate: 0.6 mL/min
Sample: A measurement solution was prepared by dissolving 10 mg of a measurement sample in 20 mL of THF, and 20 $\mu$L of the measurement solution was injected into the GPC measuring apparatus.

((Physical Property 2) Mooney Viscosity of Rubber-like Polymer)

A rubber-like polymer was used as a sample to measure a Mooney viscosity with a Mooney viscometer (trade name "VR1132" manufactured by Ueshima Seisakusho Co., Ltd.) in accordance with ISO 289.
A sample was preheated for 1 minute at 100°C, an L rotor was then rotated at 2 rpm, and torque was measured after 4 minutes to obtain a Mooney viscosity ($ML_{(1+4)}$).

((Physical Property 3) Modification Ratio)

A modification ratio of a rubber-like polymer was measured by column adsorption GPC as follows. A rubber-like polymer used as a sample was subjected to measurement utilizing a property that a modified basic polymer component adsorbs to a GPC column using a silica-based gel as a filler.
A sample solution containing the sample and low molecular weight internal standard polystyrene was measured for an amount of adsorption to a silica-based column based on a difference between a chromatogram measured with a polystyrene-based column and a chromatogram measured with a silica-based column, and thus, a modification ratio was obtained.
A sample found to have a value of the molecular weight distribution of 1.6 or more as a result of the measurement performed under Measurement Conditions 1 of (Physical Property 1) described above was subjected to the measurement under <Measurement Conditions 3> described below, and the thus obtained measurement values were used. A sample found to have a value of the molecular weight distribution less than 1.6 was subjected to the measurement under <Measurement Conditions 4> described below, and the thus obtained measurement values were used.

<Measurement Conditions 3: GPC Measurement Conditions using Polystyrene-based Column>:

GPC measuring apparatus: trade name "HLC-8320 GPC" manufactured by Tosoh Corporation
Eluent: THF containing 5 mmol/L of triethylamine
Guard column: "TSKguardcolumn Super MP(HZ)-H" manufactured by Tosoh Corporation
Column: series of three columns "TSKgel Super Multipore Hz-H" manufactured by Tosoh Corporation
Oven temperature: 40°C
Flow rate: 0.35 mL/min
RI detector: HLC8020 manufactured by Tosoh Corporation
Sample: A measurement solution was prepared by dissolving 10 mg of a measurement sample and 5 mg of standard polystyrene in 20 mL of THF, and 10 $\mu$L of the measurement solution was injected into the GPC measuring apparatus.

<Measurement Conditions 4: GPC Measurement Conditions using Polystyrene-based Column>:

GPC measuring apparatus: trade name "HLC-8320 GPC" manufactured by Tosoh Corporation
Eluent: THF containing 5 mmol/L of triethylamine
Guard column: "TSKguardcolumn Super H-H" manufactured by Tosoh Corporation
Column: "TSKgel Super H5000", "TSKgel Super H6000" and "TSKgel Super H7000" all manufactured by Tosoh Corporation connected in series in the stated order from the upstream side
Oven temperature: 40°C
Flow rate: 0.6 mL/min
RI detector: HLC8020 manufactured by Tosoh Corporation
Sample: A measurement solution was prepared by dissolving 10 mg of a measurement sample in 20 mL of THF, and 20 $\mu$L of the measurement solution was injected into the GPC measuring apparatus.

<GPC Measurement Conditions using Silica-based Column>:

GPC measuring apparatus: trade name "HLC-8320 GPC" manufactured by Tosoh Corporation
Eluent: THF
Guard column: "DIOL 4.6 × 12.5 mm 5 micron"
Column: "Zorbax PSM-1000S", "PSM-300S", "PSM-60S" connected in series in the stated order from the upstream side
Oven temperature: 40°C
Flow rate: 0.5 mL/min
RI detector: HLC8020 manufactured by Tosoh Corporation
Sample: A measurement solution was prepared by dissolving 10 mg of a measurement sample and 5 mg of standard polystyrene in 20 mL of THF, and 50 $\mu$L of the measurement solution was injected into the GPC measuring apparatus.

<Calculation Method for Modification Ratio>:

Assuming that a whole peak area of the chromatogram obtained with the polystyrene-based column is 100, a peak area P1 of the sample and a peak area P2 of standard polystyrene were obtained. Similarly, assuming that a whole peak area of the chromatogram obtained with the silica-based column is 100, a peak area P3 of the sample and a peak area P4 of standard polystyrene were obtained. Then, based on the thus obtained values of the areas, a modification ratio (%) was obtained in accordance with the following equation:

$$\text{Modification ratio (\%)} = [1 - (P2 \times P3)/(P1 \times P4)] \times 100$$

wherein P1 + P2 = P3 + P4 = 100.

((Physical Property 4) Amount of Bound Styrene)

A rubber-like polymer was used as a sample, and 100 mg of the sample was dissolved and diluted to 100 mL of chloroform to obtain a measurement sample.
An amount of absorption by a phenyl group of styrene at an ultraviolet absorption wavelength (about 254 nm) was used to measure an amount of bound styrene (% by mass) with respect to 100% by mass of the rubber-like polymer used as the sample (measuring apparatus: spectrophotometer "UV-2450" manufactured by Shimadzu Corporation).

((Physical Property 5) Microstructure of Butadiene Portion (1,2-vinyl Bond Content))

A rubber-like polymer was used as a sample, and 50 mg of the sample was dissolved in 10 mL of carbon disulfide to obtain a measurement sample.
An infrared spectrum was measured in a range of 600 to 1000 cm$^{-1}$ with a solution cell used, and based on an absorbance at a prescribed wavelength, a microstructure of a butadiene portion, namely, a 1,2-vinyl bond content (% by mol), was obtained in accordance with an equation of Hampton's method (method described in R. R. Hampton, Analytical Chemistry 21, 923 (1949)) (measuring apparatus: Fourier transform infrared spectrophotometer "FT-IR230" manufactured by JASCO Corporation).

It is noted that the "vinyl and butylene unit content" before hydrogenation corresponds to the "1,2-vinyl bond content", and these contents have the same value. Accordingly, "vinyl and butylene unit content" shown in Tables 1 to 3 corresponds to the 1,2-vinyl bond content before hydrogenation.

((Physical Property 6) Hydrogenation Rate of Rubber-like Polymer and Ethylene Structure and Vinyl and Butylene Unit Content of Rubber-like Polymer)

A rubber-like polymer was used as a sample to measure, by $^1$H-NMR measurement, a hydrogenation rate and an ethylene structure and a vinyl and butylene unit content of the rubber-like polymer.

The $^1$H-NMR measurement conditions were as follows:

<Measurement Conditions>

Apparatus: JNM-LA400 (manufactured by JEOL Ltd.)
Solvent: deuterated chloroform
Measurement sample: rubber-like polymer
Sample concentration: 50 mg/mL
Observation frequency: 400 MHz
Chemical shift reference: TMS (tetramethylsilane)
Pulse delay: 2.904 sec
Number of scans: 64
Pulse width: 45°
Measurement temperature: 26°C

((Physical Property 7) Styrene Block Content of Rubber-like Polymer)

Assuming that a chain of eight or more styrene structure units is defined as a styrene block, a content of the styrene block was obtained as follows.

A $^1$H-NMR spectrum at 400 MHz of a rubber-like polymer was measured with deuterated chloroform used as a solvent. Based on the spectrum, a ratio of an integrated value of the following (X) in each chemical shift range was obtained, and thus, the content of the styrene block contained in the rubber-like polymer was obtained.

Chain of eight or more aromatic vinyl compounds:

$$6.00 \leq X < 6.68$$

((Physical Property 8) Iodine Value of Rubber-like Polymer)

A rubber-like polymer was used as a sample. The sample was dissolved in cyclohexane, an iodine monochloride solution was added thereto, and the resultant was left to stand still in a dark place. Thereafter, potassium iodide and water were added thereto, and the resultant was titrated with a sodium thiosulfate solution. When the color of the resultant solution became pale yellow, a starch solution was added thereto, the resultant was titrated until blue color disappeared, and thus, an iodine value was obtained.

((Physical Property 9) Glass Transition Temperature (Tg) of Rubber-like Polymer)

A rubber-like polymer was used as a sample. A peak top (an inflection point) of a DSC differential curve obtained by recording a DSC curve during temperature increase at 20°C/min from -100°C under a current of 50 mL/min of helium using a differential scanning calorimeter "DSC3200S" manufactured by Mac Science in accordance with ISO 22768: 2006 was determined as the glass transition temperature (Tg).

((Physical Property 10) Calculated SP Value of Rubber-like Polymer)

The SP value ($MPa^{1/2}$) of a rubber-like polymer was calculated according to the expression: ((Molar cohesive energy) / (Molar volume))$^{1/2}$. The calculated SP value is shown in Tables 1 to 3.

Here, when the rubber-like polymer is constituted by two or more types of different monomers, an additive property holds in the molar cohesive energy. Based on the content percentage (% by mol) of each monomer and the molar cohesive energy of a homopolymer of the monomer, the molar cohesive energy of the polymer was calculated as an average value of the molar cohesive energy of each monomer (an average value apportioned depending on the content percentage).

An additive property also holds in the molar volume, as in the molar cohesive energy. Based on the content percentage (% by mol) of each monomer and the molar volume of a homopolymer of the monomer, the molar volume of the polymer was calculated as an average value of the molar volume of each monomer (an average value apportioned depending on the content percentage).

The molar cohesive energy and the molar volume of a homopolymer constituted by each monomer are shown below.

<Polyethylene Homopolymer>

Molar cohesive energy: 36,932 (J/mol)
Molar volume: 97.0 ($\times$ $10^{-6}$ $m^3$/mol)

<1,2-Polybutadiene Homopolymer>

Molar cohesive energy: 16,450 (J/mol)
Molar volume: 58.3 ($\times$ $10^{-6}$ $m^3$/mol)

<1,4-Polybutadiene Homopolymer>

Molar cohesive energy: 18,579 (J/mol)
Molar volume: 59.1 ($\times$ $10^{-6}$$m^3$/mol)

<1,2-Polybutylene Homopolymer>

Molar cohesive energy: 17,527 (J/mol)
Molar volume: 65.6 ($\times$ $10^{-6}$ $m^3$/mol)

<Polyethylene (1,4-Hydrogenated Polybutadiene) Homopolymer>

Molar cohesive energy: 18,146 (J/mol)
Molar volume: 64.4 ($\times$ $10^{-6}$ $m^3$/mol)

[Production of Rubber-like Polymer]

(Preparation of Hydrogenation Catalyst)

A nitrogen-substituted reaction vessel was charged with 1 L of dried and purified cyclohexane, and 100 mmol of bis($\eta$5-cyclopentadienyl)titanium dichloride was added thereto. Under sufficient stirring, a n-hexane solution containing 200 mmol of trimethyl aluminum was added thereto to be reacted for about 3 days at room temperature, and thus, a hydrogenation catalyst (TC-1) was obtained.

((Polymerization Example 1) Rubber-like Polymer 1)

A temperature-controllable autoclave having an internal capacity of 40 L and equipped with a stirrer and a jacket was used as a reactor. The reactor was charged with 2,700 g of 1,3-butadiene, 300 g of styrene, and 21,000 g of cyclohexane, from which impurities had been precedently removed, and 30 mmol of tetrahydrofuran (THF) and 11.6 mmol of 2,2-bis(2-oxolanyl)propane used as polar substances, and the internal temperature of the reactor was kept at 43°C.

As a polymerization initiator, 68.0 mmol of n-butyllithium was supplied to the reactor.

After starting a polymerization reaction, the temperature within the reactor started to increase due to heat generation through polymerization, and the temperature within the reactor finally reached 76°C. Two minutes after reaching this reaction temperature peak, 13.6 mmol of 2,2-dimethoxy-1-(3-trimethoxysilylpropyl)-1-aza-2-silacyclopentane (compound 1) was added to the reactor to perform a coupling reaction for 20 minutes. To the thus obtained polymer solution, 13.3 mmol of methanol used as a reaction terminator was added, a part of the rubber-like polymer solution before hydrogenation was extracted for analysis to be desolvated with a dryer, and thus, a rubber-like polymer before hydrogenation was obtained.

Thereafter, to the rubber-like polymer solution before hydrogenation, the hydrogenation catalyst (TC-1) was added in an amount, in terms of titanium, of 70 ppm per 100 parts by mass of the rubber-like polymer before hydrogenation, followed by a hydrogenation reaction at a hydrogen pressure of 0.8 MPa and an average temperature of 85°C for 40 minutes, and thus, a rubber-like polymer 1 was obtained. The rubber-like polymer 1 thus obtained had an iodine value of 108.

To a solution of the thus obtained rubber-like polymer 1, 12.6 g of n-octadecyl-3-(3,5-di-t-butyl-4-hydroxyphenyl)-propionate and 3.0 g of 4,6-bis(octylthiomethyl)-o-cresol were added as antioxidants, and the resultant was dried.

Analysis results are shown in Table 1.

((Polymerization Examples 2 and 3) Rubber-like Polymers 2 and 3)

A rubber-like polymer 2 was obtained in the same manner as in Polymerization Example 1 described above except that the hydrogenation reaction was performed for 60 minutes.

A rubber-like polymer 3 was obtained in the same manner as in Polymerization Example 1 described above except that the hydrogenation reaction was performed for 80 minutes.

The rubber-like polymer 2 thus obtained had an iodine value of 65, and the rubber-like polymer 3 thus obtained had an iodine value of 22.

Analysis results are shown in Table 1.

((Polymerization Example 4) Rubber-like Polymer 4)

A temperature-controllable autoclave having an internal capacity of 40 L and equipped with a stirrer and a jacket was used as a reactor. The reactor was charged with 3,000 g of 1,3-butadiene, and 21,000 g of cyclohexane, from which impurities had been precedently removed, 30 mmol of tetrahydrofuran (THF), and 8.9 mmol of 2,2-bis(2-oxolanyl)propane used as polar substances, and the internal temperature of the reactor was kept at 43°C.

As a polymerization initiator, 49.2 mmol of n-butyllithium was supplied to the reactor.

After starting a polymerization reaction, the temperature within the reactor started to increase due to heat generation through polymerization, and the temperature within the reactor finally reached 78°C. Two minutes after reaching this reaction temperature peak, 9.8 mmol of 2,2-dimethoxy-1-(3-trimethoxysilylpropyl)-1-aza-2-silacyclopentane (compound 1) was added to the reactor to perform a coupling reaction for 20 minutes. To the thus obtained polymer solution, 9.3 mmol of methanol used as a reaction terminator was added, and a part of the rubber-like polymer solution before hydrogenation was extracted for analysis to be desolvated with a dryer, and thus, a rubber-like polymer before hydrogenation was obtained.

Thereafter, to the rubber-like polymer solution before hydrogenation, the hydrogenation catalyst (TC-1) was added in an amount, in terms of titanium, of 70 ppm per 100 parts by mass of the rubber-like polymer before hydrogenation, followed by a hydrogenation reaction at a hydrogen pressure of 0.8 MPa and an average temperature of 85°C for 60 minutes, and thus, a rubber-like polymer 4 was obtained. The rubber-like polymer 4 thus obtained had an iodine value of 137.

To a solution of the thus obtained rubber-like polymer 4, 12.6 g of n-octadecyl-3-(3,5-di-t-butyl-4-hydroxyphenyl)-propionate and 3.0 g of 4,6-bis(octylthiomethyl)-o-cresol were added as antioxidants, and the resultant was dried.

Analysis results are shown in Table 1.

((Polymerization Example 5) Rubber-like Polymer 5)

A temperature-controllable autoclave having an internal capacity of 40 L and equipped with a stirrer and a jacket was used as a reactor. The reactor was charged with 3,000 g of 1,3-butadiene, and 21,000 g of cyclohexane, from which impurities had been precedently removed, and 30 mmol of tetrahydrofuran (THF) and 2.7 mmol of 2,2-bis(2-oxolanyl)propane used as polar substances, and the internal temperature of the reactor was kept at 41°C.

As a polymerization initiator, 54.8 mmol of n-butyllithium was supplied to the reactor.

After starting a polymerization reaction, the temperature within the reactor started to increase due to heat generation through polymerization, and the temperature within the reactor finally reached 76°C. Two minutes after reaching this reaction temperature peak, 11.0 mmol of 2,2-dimethoxy-1-(3-trimethoxysilylpropyl)-1-aza-2-silacyclopentane (compound 1) was added to the reactor to perform a coupling reaction for 20 minutes. To the thus obtained polymer solution, 10.4 mmol of methanol used as a reaction terminator was added, and a part of the rubber-like polymer solution before hydrogenation was extracted for analysis to be desolvated with a dryer, and thus, a rubber-like polymer before hydrogenation was obtained.

Thereafter, to the rubber-like polymer solution before hydrogenation, the hydrogenation catalyst (TC-1) was added in an amount, in terms of titanium, of 70 ppm per 100 parts by mass of the rubber-like polymer before hydrogenation, followed by a hydrogenation reaction at a hydrogen pressure of 0.8 MPa and an average temperature of 85°C for 80 minutes, and thus, a rubber-like polymer 5 was obtained. The rubber-like polymer 5 thus obtained had an iodine value of 33.

To a solution of the thus obtained rubber-like polymer 5, 12.6 g of n-octadecyl-3-(3,5-di-t-butyl-4-hydroxyphenyl)-propionate and 3.0 g of 4,6-bis(octylthiomethyl)-o-cresol were added as antioxidants, and the resultant was dried.

Analysis results are shown in Table 1.

((Polymerization Example 6) Rubber-like Polymer 6)

A rubber-like polymer 6 was obtained in the same manner as in Polymerization Example 1 described above except that the amount of 2,2-bis(2-oxolanyl)propane added was 1.5 mmol; and the hydrogenation reaction was performed for 20 minutes.

The rubber-like polymer 6 thus obtained had an iodine value of 238.

Analysis results are shown in Table 1.

((Polymerization Example 7) Rubber-like Polymer 7)

A rubber-like polymer 7 was obtained in the same manner as in Polymerization Example 6 described above except that the hydrogenation reaction was performed for 60 minutes.

The rubber-like polymer 7 thus obtained had an iodine value of 65.

Analysis results are shown in Table 1.

((Polymerization Example 8) Rubber-like Polymer 8)

A rubber-like polymer 8 was obtained in the same manner as in Polymerization Example 1 described above except that the amount of 2,2-bis(2-oxolanyl)propane added was 25.0 mmol; and the hydrogenation reaction was performed for 30 minutes.

The rubber-like polymer 8 thus obtained had an iodine value of 173.

Analysis results are shown in Table 1.

((Polymerization Example 9) Rubber-like Polymer 9)

A rubber-like polymer 9 was obtained in the same manner as in Polymerization Example 1 described above except that the amount of each component added was 2,640 g of 1,3-butadiene, 360 g of styrene, 54.8 mmol of n-butyllithium, 5.0 mmol of 2,2-bis(2-oxolanyl)propane, 11.0 mmol of 2,2-dimethoxy-1-(3-trimethoxysilylpropyl)-1-aza-2-silacyclopentane (compound 1), and 10.7 mmol of methanol.

The rubber-like polymer 9 thus obtained had an iodine value of 124.

Analysis results are shown in Table 1.

((Polymerization Example 10) Rubber-like Polymer 10)

A rubber-like polymer 10 was obtained in the same manner as in Polymerization Example 4 described above except that the amount of each component added was 75.0 mmol of n-butyllithium, 6.5 mmol of 2,2-bis(2-oxolanyl)propane, 15.0 mmol of 2,2-dimethoxy-1-(3-trimethoxysilylpropyl)-1-aza-2-silacyclopentane (compound 1), and 14.6 mmol of methanol; and the hydrogenation reaction was performed for 20 minutes.

The rubber-like polymer 10 thus obtained had an iodine value of 235.

Analysis results are shown in Table 1.

((Polymerization Example 11) Rubber-like Polymer 11)

A rubber-like polymer 11 was obtained in the same manner as in Polymerization Example 10 described above except that the hydrogenation reaction was performed for 60 minutes.

The rubber-like polymer 11 thus obtained had an iodine value of 71.

Analysis results are shown in Table 2.

((Polymerization Example 12) Rubber-like Polymer 12)

A rubber-like polymer 12 was obtained in the same manner as in Polymerization Example 1 described above except that the amount of each component added was 2,550 g of 1,3-butadiene, 450 g of styrene, 70.0 mmol of n-butyllithium, 20.0 mmol of 2,2-bis(2-oxolanyl)propane, 14.0 mmol of 2,2-dimethoxy-1-(3-trimethoxysilylpropyl)-1-aza-2-silacyclopentane (compound 1), and 13.6 mmol of methanol; and the hydrogenation reaction was performed for 20 minutes.

The rubber-like polymer 12 thus obtained had an iodine value of 200.

Analysis results are shown in Table 2.

((Polymerization Example 13) Rubber-like Polymer 13)

A rubber-like polymer 13 was obtained in the same manner as in Polymerization Example 12 described above except that the amount of each component added was 2,640 g of 1,3-butadiene, 360 g of styrene, and 25.0 mmol of 2,2-bis(2-oxolanyl)propane.

The rubber-like polymer 13 thus obtained had an iodine value of 248.

Analysis results are shown in Table 2.

((Polymerization Example 14) Rubber-like Polymer 14)

A rubber-like polymer 14 was obtained in the same manner as in Polymerization Example 1 described above except that the amount of each component added was 2,850 g of 1,3-butadiene, 150 g of styrene, 60.0 mmol of n-butyllithium, 35.0 mmol of 2,2-bis(2-oxolanyl)propane, 12.0 mmol of 2,2-dimethoxy-1-(3-trimethoxysilylpropyl)-1-aza-2-silacyclopentane (compound 1), and 11.6 mmol of methanol.

The rubber-like polymer 14 thus obtained had an iodine value of 112.

Analysis results are shown in Table 2.

((Polymerization Example 15) Rubber-like Polymer 15)

A rubber-like polymer 15 was obtained in the same manner as in Polymerization Example 1 described above except that the amount of each component added was 2,940 g of 1,3-butadiene, 60 g of styrene, 70.0 mmol of n-butyllithium, 40.0 mmol of 2,2-bis(2-oxolanyl)propane, 14.0 mmol of 2,2-dimethoxy-1-(3-trimethoxysilylpropyl)-1-aza-2-silacyclopentane (compound 1), and 13.6 mmol of methanol.

The rubber-like polymer 15 thus obtained had an iodine value of 138.

Analysis results are shown in Table 2.

((Polymerization Example 16) Rubber-like Polymer 16)

A rubber-like polymer 16 was obtained in the same manner as in Polymerization Example 1 described above except that the amount of each component added was 2,700 g of 1,3-butadiene, 300 g of styrene, 70.0 mmol of n-butyllithium, 50.0 mmol of 2,2-bis(2-oxolanyl)propane, 14.0 mmol of 2,2-dimethoxy-1-(3-trimethoxysilylpropyl)-1-aza-2-silacyclopentane (compound 1), and 13.6 mmol of methanol; and the hydrogenation reaction was performed for 30 minutes.

The rubber-like polymer 16 thus obtained had an iodine value of 169.

Analysis results are shown in Table 2.

((Polymerization Example 17) Rubber-like Polymer 17)

A rubber-like polymer 17 was obtained in the same manner as in Polymerization Example 16 described above except that the hydrogenation reaction was performed for 80 minutes.

The rubber-like polymer 17 thus obtained had an iodine value of 21.

Analysis results are shown in Table 2.

((Polymerization Example 18) Rubber-like Polymer 18)

A rubber-like polymer 18 was obtained in the same manner as in Polymerization Example 1 described above except that the amount of each component added was 1,950 g of 1,3-butadiene, 1050 g of styrene, 70.0 mmol of n-butyllithium, 30.0 mmol of 2,2-bis(2-oxolanyl)propane, 14.0 mmol of 2,2-dimethoxy-1-(3-trimethoxysilylpropyl)-1-aza-2-silacyclopentane (compound 1), and 13.6 mmol of methanol; and the hydrogenation reaction was performed for 30 minutes.

The rubber-like polymer 18 thus obtained had an iodine value of 122.

Analysis results are shown in Table 2.

((Polymerization Example 19) Rubber-like Polymer 19)

A rubber-like polymer 19 was obtained in the same manner as in Polymerization Example 18 described above except that the hydrogenation reaction was performed for 80 minutes.

The rubber-like polymer 19 thus obtained had an iodine value of 15.

Analysis results are shown in Table 2.

((Polymerization Example 20) Rubber-like Polymer 20)

A rubber-like polymer 20 was obtained in the same manner as in Polymerization Example 1 described above except that the amount of each component added was 95.0 mmol of n-butyllithium, 30.0 mmol of 2,2-bis(2-oxolanyl)propane, 19.0 mmol of 2,2-dimethoxy-1-(3-trimethoxysilylpropyl)-1-aza-2-silacyclopentane (compound 1), and 18.5 mmol of methanol.

The rubber-like polymer 20 thus obtained had an iodine value of 108.

Analysis results are shown in Table 2.

((Polymerization Example 21) Rubber-like Polymer 21)

A rubber-like polymer 21 was obtained in the same manner as in Polymerization Example 1 described above except that the amount of each component added was 15.0 mmol of n-butyllithium, 10.0 mmol of tetrahydrofuran (THF), 3.0 mmol of 2,2-dimethoxy-1-(3-trimethoxysilylpropyl)-1-aza-2-silacyclopentane (compound 1), and 29.9 mmol of methanol; and 2,2-bis(2-oxolanyl)propane was not added.

The rubber-like polymer 21 thus obtained had an iodine value of 108.

Analysis results are shown in Table 3.

((Polymerization Example 22) Rubber-like Polymer 22)

A rubber-like polymer 22 was obtained in the same manner as in Polymerization Example 1 described above except that the amount of each component added was 7.6 mmol of 2,2-dimethoxy-1-(3-trimethoxysilylpropyl)-1-aza-2-silacyclopentane (compound 1) and 7.4 mmol of methanol.

The rubber-like polymer 22 thus obtained had an iodine value of 108.

Analysis results are shown in Table 3.

((Polymerization Example 23) Rubber-like Polymer 23)

A rubber-like polymer 23 was obtained in the same manner as in Polymerization Example 1 described above except that the amount of each component added was 10.2 mmol of 2,2-dimethoxy-1-(3-trimethoxysilylpropyl)-1-aza-2-silacyclopentane (compound 1) and 9.9 mmol of methanol.

The rubber-like polymer 23 thus obtained had an iodine value of 108.

Analysis results are shown in Table 3.

((Polymerization Example 24) Rubber-like Polymer 24)

A rubber-like polymer 24 was obtained in the same manner as in Polymerization Example 1 described above except that the amount of each component added was 75.0 mmol of n-butyllithium, 16.0 mmol of 2,2-bis(2-oxolanyl)propane, and 9.7 mmol of methanol; and 10.0 mmol of tris(3-trimethoxysilylpropyl)amine (compound 2) was used instead of 2,2-dimethoxy-1-(3-trimethoxysilylpropyl)-1-aza-2-silacyclopentane (compound 1) .

The rubber-like polymer 24 thus obtained had an iodine value of 108.

Analysis results are shown in Table 3.

((Polymerization Example 25) Rubber-like Polymer 25)

A rubber-like polymer 25 was obtained in the same manner as in Polymerization Example 1 described above except that the amount of each component added was 82.0 mmol of n-butyllithium, 20.0 mmol of 2,2-bis(2-oxolanyl)propane, and 7.9 mmol of methanol; and 8.2 mmol of tetrakis(3-trimethoxysilylpropyl)-1,3-bisaminomethylcyclohexane (compound 3) was used instead of 2,2-dimethoxy-1-(3-trimethoxysilylpropyl)-1-aza-2-silacyclopentane (compound 1).

The rubber-like polymer 25 thus obtained had an iodine value of 108.

Analysis results are shown in Table 3.

((Polymerization Example 26) Rubber-like Polymer 26)

A rubber-like polymer 26 was obtained in the same manner as in Polymerization Example 1 described above except that the amount of each component added was 6.5 mmol of 2,2-dimethoxy-1-(3-trimethoxysilylpropyl)-1-aza-2-silacyclopentane (compound 1) and 6.3 mmol of methanol.

The rubber-like polymer 26 thus obtained had an iodine value of 108.

Analysis results are shown in Table 3.

((Polymerization Example 27) Rubber-like Polymer 27)

A rubber-like polymer 27 was obtained in the same manner as in Polymerization Example 1 described above except that the amount of each component added was 1,800 g of 1,3-butadiene, 1200 g of styrene, 60.0 mmol of n-butyllithium, 7.0 mmol of 2,2-bis(2-oxolanyl)propane, 12.0 mmol of 2,2-dimethoxy-1-(3-trimethoxysilylpropyl)-1-aza-2-silacyclopentane (compound 1), and 11.6 mmol of methanol.

The rubber-like polymer 27 thus obtained had an iodine value of 71.

Analysis results are shown in Table 3.

((Polymerization Example 28) Rubber-like Polymer 28)

A rubber-like polymer 28 was obtained in the same manner as in Polymerization Example 1 described above except that the amount of each component added was 60.0 mmol of n-butyllithium, 20.0 mmol of tetrahydrofuran (THF), 12.0 mmol of 2,2-dimethoxy-1-(3-trimethoxysilylpropyl)-1-aza-2-silacyclopentane (compound 1), and 11.6 mmol of methanol; and 2,2-bis(2-oxolanyl)propane was not added.

The rubber-like polymer 28 thus obtained had an iodine value of 108.

Analysis results are shown in Table 3.

Compounds 1 to 3 in Tables 1 to 3 described below will be shown.

Compound 1: 2,2-dimethoxy-1-(3-trimethoxysilylpropyl)-1-aza-2-silacyclopentane
Compound 2: tris(3-trimethoxysilylpropyl)amine
Compound 3: tetrakis(3-trimethoxysilylpropyl)-1,3-bisaminomethylcyclohexane

[Table 1]

| | | Polymerization Example 1 | Polymerization Example 2 | Polymerization Example 3 | Polymerization Example 4 | Polymerization Example 5 | Polymerization Example 6 | Polymerization Example 7 | Polymerization Example 8 | Polymerization Example 9 | Polymerization Example 10 |
|---|---|---|---|---|---|---|---|---|---|---|---|
| Rubber-like Polymer | | 1 | 2 | 3 | 4 | 5 | 6 | 7 | 8 | 9 | 10 |
| Amount of Bound Styrene | mass% | 8 | 8 | 8 | 0 | 0 | 8 | 8 | 8 | 12 | 0 |
| Vinyl and Butylene Unit Content | mol% | 39 | 39 | 39 | 45 | 32 | 20 | 20 | 50 | 30 | 20 |
| Styrene Block Content | mass% | 1.5 | 1.5 | 1.5 | 0 | 0 | 1.5 | 1.5 | 1.5 | 0 | 0 |
| Modifier | | Compound 1 | Compound 1 | Compound 1 | Compound 1 | Compound 1 | Compound 1 | Compound 1 | Compound 1 | Compound 1 | Compound 1 |
| Modification Ratio | % | 80 | 80 | 80 | 80 | 80 | 80 | 80 | 80 | 80 | 80 |
| Weight Average Molecular Weight | ten thousand | 35 | 35 | 35 | 30 | 25 | 35 | 35 | 35 | 30 | 21 |
| Mooney Viscosity | ML(1+4) @100°C | 66 | 72 | 83 | 73 | 91 | 64 | 78 | 70 | 67 | 60 |
| Iodine Value | Ig/100 g | 108 | 65 | 22 | 137 | 33 | 238 | 65 | 173 | 124 | 235 |
| Ethylene Structure | mass% | 33.1 | 42.3 | 51.5 | 26.1 | 63.2 | 23.5 | 60.3 | 9.3 | 35.7 | 30.5 |
| Hydrogenation Rate | mol% | 75 | 85 | 95 | 71 | 93 | 45 | 85 | 60 | 70 | 50 |
| Tg | °C | -68.9 | -67.5 | -66.0 | -75.0 | -76.4 | -80.9 | -73.2 | -66.4 | -68.6 | -88.4 |
| Calculated SP Value | $MPa^{1/2}$ | 17.1 | 17.1 | 17.0 | 17.0 | 16.9 | 17.4 | 17.1 | 17.1 | 17.3 | 17.2 |

EP 4 275 914 A1

[Table 2]

| | | Polymerization Example 11 | Polymerization Example 12 | Polymerization Example 13 | Polymerization Example 14 | Polymerization Example 15 | Polymerization Example 16 | Polymerization Example 17 | Polymerization Example 18 | Polymerization Example 19 | Polymerization Example 20 |
|---|---|---|---|---|---|---|---|---|---|---|---|
| Rubber-like Polymer | | 11 | 12 | 13 | 14 | 15 | 16 | 17 | 18 | 19 | 20 |
| Amount of Bound Styrene | mass% | 0 | 15 | 12 | 5 | 2 | 10 | 10 | 35 | 35 | 8 |
| Vinyl and Butylene Unit Content | mol% | 20 | 40 | 40 | 70 | 70 | 79 | 79 | 50 | 50 | 39 |
| Styrene Block Content | mass% | 0 | 1.5 | 1.5 | 1.2 | 0.8 | 1.5 | 1.5 | 2.5 | 2.5 | 1.5 |
| Modifier | | Compound 1 | Compound 1 | Compound 1 | Compound 1 | Compound 1 | Compound 1 | Compound 1 | Compound 1 | Compound 1 | Compound 1 |
| Modification Ratio | % | 80 | 80 | 80 | 80 | 80 | 80 | 80 | 80 | 80 | 80 |
| Weight Average Molecular Weight | ten thousand | 21 | 25 | 25 | 30 | 25 | 25 | 25 | 25 | 25 | 10 |
| Mooney Viscosity | ML(1+4)@100°C | 85 | 65 | 62 | 70 | 61 | 66 | 76 | 69 | 79 | 28 |
| Iodine Value | g/100 g | 71 | 200 | 248 | 112 | 138 | 169 | 21 | 122 | 15 | 108 |
| Ethylene Structure | mass% | 65.4 | 8.7 | 0.0 | 4.8 | 0.0 | 0.0 | 14.5 | 6.6 | 29.7 | 33.5 |
| Hydrogenation Rate | mol% | 85 | 50 | 40 | 75 | 70 | 60 | 95 | 60 | 95 | 75 |
| Tg | °C | -81.3 | -64.5 | -63.2 | -58.0 | -55.5 | -40.2 | -47.4 | -34.5 | -31.1 | -68.9 |
| Calculated SP Value | $MPa^{1/2}$ | 16.9 | 17.4 | 17.5 | 16.8 | 16.9 | 17.0 | 16.8 | 17.8 | 17.7 | 17.1 |

[Table 3]

| | | Polymerization Example 21 | Polymerization Example 22 | Polymerization Example 23 | Polymerization Example 24 | Polymerization Example 25 | Polymerization Example 26 | Polymerization Example 27 | Polymerization Example 28 |
|---|---|---|---|---|---|---|---|---|---|
| Rubber-like Polymer | | 21 | 22 | 23 | 24 | 25 | 26 | 27 | 28 |
| Amount of Bound Styrene | mass% | 8 | 8 | 8 | 8 | 8 | 8 | 40 | 8 |
| Vinyl and Butylene Unit Content | mol% | 39 | 39 | 39 | 39 | 39 | 39 | 50 | 15 |
| Styrene Block Content | mass% | 1.8 | 1.5 | 1.5 | 1.5 | 1.5 | 1.5 | 2.8 | 1.5 |
| Modifier | | none | Compound 1 | Compound 1 | Compound 2 | Compound 3 | Compound 1 | Compound 1 | Compound 1 |
| Modification Ratio | % | - | 45 | 60 | 80 | 80 | 80 | 80 | 80 |
| Weight Average Molecular Weight | ten thousand | 25 | 29 | 31 | 35 | 35 | 28 | 33 | 29 |
| Mooney Viscosity | ML(1+4) @100°C | 66 | 62 | 64 | 68 | 67 | 61 | 69 | 72 |
| Iodine Value | I g/100 g | 108 | 108 | 108 | 108 | 108 | 108 | 71 | 108 |
| Ethylene Structure | mass% | 33.5 | 33.5 | 33.5 | 33.5 | 33.5 | 33.5 | 15.3 | 55.8 |
| Hydrogenation Rate | mol% | 75 | 75 | 75 | 75 | 75 | 75 | 75 | 75 |
| Tg | °C | -68.9 | -68.9 | -68.9 | -68.9 | -68.9 | -68.9 | -26.1 | -76.4 |
| Calculated SP Value | MPa$^{1/2}$ | 17.1 | 17.1 | 17.1 | 17.1 | 17.1 | 17.1 | 17.9 | 17.2 |

[Rubber Composition for Sidewall]

(Examples 1 to 10), (Examples 41 to 69), (Comparative Example 1), and (Comparative Examples 5 to 10)

Respective components shown below were mixed to obtain rubber compositions.

More specifically, a closed kneader (having an internal capacity of 0.5 L) equipped with a temperature controller was used to knead, as first stage kneading, a rubber component, a reinforcing filler, a silane coupling agent, an extender oil, stearic acid, an anti-aging agent and wax under conditions of a filling rate of 65% and a rotor speed of 50 to 90 rpm.

Here, the temperature of the closed mixer was controlled to obtain a compound at a discharge temperature of 150 to 160°C.

Next, as second stage kneading, after the compound obtained as described above was cooled to room temperature, and the resultant was kneaded again for improving dispersibility of the reinforcing filler. Also in this case, the discharge temperature of the compound was adjusted to 150 to 160°C by the temperature control of the mixer.

After cooling, as third stage kneading, the resultant was kneaded with a zinc powder, a vulcanization accelerator, and sulfur added thereto with an open roll set to 70°C.

Thereafter, the resultant was molded, and vulcanized with a vulcanization press under conditions of 160°C and 15 to 30 minutes.

The rubber composition after the vulcanization was evaluated by the following methods.

Results of evaluations 1 to 4 are shown in Tables 4 and 8 to 13.

(Blended Materials of Rubber Composition for Sidewall)

<Rubber Component>

Rubber-like polymers 1 to 28: rubber-like polymers obtained in Polymerization Examples

NR: natural rubber RSS No. 3 (producer: UNIMAC RUBBER CO., LTD. (Thailand), supplier: Marubeni Techno Rubber Corporation)

BR: polybutadiene rubber (trade name "UBEPOL 150" manufactured by UBE Corporation)

<Reinforcing Filler>

Carbon black (trade name "Seast SO (FEF)" manufactured by Tokai Carbon Co., Ltd., nitrogen adsorption specific surface area: 42 m$^2$/g)

Silica (trade name "ULTRASIL 7000GR" manufactured by Evonik Degussa Japan Co., Ltd., nitrogen adsorption specific surface area: 175 m$^2$/g)

<Silane Coupling Agent>

Silane coupling agent (trade name "Si75" manufactured by Evonik Degussa Japan Co., Ltd., bis(triethoxysilylpropyl) disulfide)

<Extender Oil>

Mineral oil: "Process Oil PF30" (SRAE oil) manufactured by JXTG Nippon Oil & Energy Corporation

<Chemical>

Stearic acid (trade name "Lunac S-90V" manufactured by Kao Corporation)

Anti-aging agent 6C (trade name "Nocrac 6C" manufactured by Ouchi Shinko Chemical Industrial Co., Ltd. )

Wax (trade name "Sunnoc" manufactured by Ouchi Shinko Chemical Industrial Co., Ltd.)

<Zinc Powder>

Zinc powder (trade name "Zinc Oxide" manufactured by Sakai Chemical Industry Co., Ltd.)

<Vulcanization Accelerator>

DPG (1,3-diphenylguanidine) (trade name "Nocceler D-P" manufactured by Ouchi Shinko Chemical Industrial Co., Ltd. )
TBBS (N-tert-butylbenzothiazole-2-sulfenamide) (trade name "Sanceler NS-G" manufactured by Sanshin Chemical Industry Co., Ltd.)

<Sulfur>

Powdered sulfur ("SULFAX 200S" manufactured by Tsurumi Chemical Industry Co., Ltd.)

[Rubber Composition for Gum Chafer]

(Examples 11 to 20) and (Comparative Example 2)

Respective components shown below were mixed to obtain rubber compositions.
A closed kneader (having an internal capacity of 0.5 L) equipped with a temperature controller was used to knead, as first stage kneading, a rubber component, a reinforcing filler, a silane coupling agent, an extender oil, a resin, stearic acid and an anti-aging agent under conditions of a filling rate of 65% and a rotor speed of 50 to 90 rpm. Here, the temperature of the closed mixer was controlled to obtain a compound at a discharge temperature of 150 to 160°C.
Next, as second stage kneading, after the compound obtained as described above was cooled to room temperature, the resultant was kneaded again for improving dispersibility of the reinforcing filler. Also in this case, the discharge temperature of the compound was adjusted to 150 to 160°C by the temperature control of the mixer.
After cooling, as third stage kneading, the resultant was kneaded with a zinc powder, a vulcanization accelerator, and sulfur added thereto with an open roll set to 70°C.
Thereafter, the resultant was molded, and vulcanized with a vulcanization press under conditions of 150°C and 20 to 35 minutes. The rubber composition after the vulcanization was evaluated by the following methods.
Results of evaluation 1 and evaluation 2 are shown in Table 5.

(Blended Materials of Rubber Composition for Gum Chafer)

<Rubber Component>

Rubber-like polymers 1 to 5: rubber-like polymers obtained in Polymerization Examples

NR: natural rubber RSS No. 3 (producer: UNIMAC RUBBER CO., LTD. (Thailand), supplier: Marubeni Techno Rubber Corporation)
BR: polybutadiene rubber (trade name "UBEPOL 150" manufactured by UBE Corporation))

<Reinforcing Filler>

Carbon black (trade name "Seast KH (N339)" manufactured by Tokai Carbon Co., Ltd., nitrogen adsorption specific surface area: 93 m$^2$/g)
Silica (trade name "ULTRASIL 7000GR" manufactured by Evonik Degussa Japan Co., Ltd., nitrogen adsorption specific surface area: 175 m$^2$/g)

<Silane Coupling Agent>

Silane coupling agent (trade name "Si75" manufactured by Evonik Degussa Japan Co., Ltd., bis(triethoxysilylpropyl) disulfide)

<Resin>

Alkylphenol-formaldehyde resin ("TACKIROL 130" manufactured by Taoka Chemical Co., Ltd.)

<Extender Oil>

Mineral oil: "Process Oil PF30" (SRAE oil) manufactured by JXTG Nippon Oil & Energy Corporation

<Chemical>

Stearic acid (trade name "Lunac S-90V" manufactured by Kao Corporation)
Anti-aging agent 6C (trade name "Nocrac 6C" manufactured by Ouchi Shinko Chemical Industrial Co., Ltd. )

<Zinc Powder>

Zinc powder (trade name "Zinc Oxide" manufactured by Sakai Chemical Industry Co., Ltd.)

<Vulcanization Accelerator>

DPG (1,3-diphenylguanidine) (trade name "Nocceler D-P" manufactured by Ouchi Shinko Chemical Industrial Co., Ltd. )
TBBS (N-tert-butylbenzothiazole-2-sulfenamide) (trade name "Sanceler NS-G" manufactured by Sanshin Chemical Industry Co., Ltd.)

<Sulfur>

Powdered sulfur ("SULFAX 200S" manufactured by Tsurumi Chemical Industry Co., Ltd.)

[Rubber Composition for Steal Belt Coating Rubber]

(Examples 21 to 30) and (Comparative Example 3)

Respective components shown below were mixed to obtain rubber compositions.
A closed kneader (having an internal capacity of 0.5 L) equipped with a temperature controller was used to knead, as first stage kneading, a rubber component, a reinforcing filler, a silane coupling agent, an extender oil, a zinc powder, an anti-aging agent and cobalt salt under conditions of a filling rate of 65% and a rotor speed of 50 to 90 rpm. Here, the temperature of the closed mixer was controlled to obtain each compound at a discharge temperature of 150 to 160°C.
Next, as second stage kneading, after the compound obtained as described above was cooled to room temperature, the resultant was kneaded again for improving dispersibility of the reinforcing filler. Also in this case, the discharge temperature of the compound was adjusted to 150 to 160°C by the temperature control of the mixer.
After cooling, as third stage kneading, the resultant was kneaded with a zinc powder, a vulcanization accelerator, and insoluble sulfur added thereto with an open roll set to 70°C.
Thereafter, the resultant was molded, and vulcanized with a vulcanization press under conditions of 150°C and 20 to 40 minutes. The rubber composition after the vulcanization was evaluated by the following methods.
Results of evaluation 1 and evaluation 2 are shown in Table 6.

(Blended Materials of Rubber Composition for Steal Belt Coating)

<Rubber Component>

Rubber-like polymers 1 to 5: rubber-like polymers obtained in Polymerization Examples

NR: natural rubber RSS No. 3 (producer: UNIMAC RUBBER CO., LTD. (Thailand), supplier: Marubeni Techno Rubber Corporation)

<Reinforcing Filler>

Carbon black (trade name "Seast KH (N339)" manufactured by Tokai Carbon Co., Ltd., nitrogen adsorption specific surface area: 93 m$^2$/g))
Silica (trade name "ULTRASIL 7000GR" manufactured by Evonik Degussa Japan Co., Ltd., nitrogen adsorption specific surface area: 175 m$^2$/g)

<Silane Coupling Agent>

Silane coupling agent (trade name "Si75" manufactured by Evonik Degussa Japan Co., Ltd., bis(triethoxysilylpropyl) disulfide)

<Extender Oil>

Mineral oil: "Super Oil Y-22" (spindle oil) manufactured by JXTG Nippon Oil & Energy Corporation

<Chemical>

Zinc powder (trade name "Zinc Oxide" manufactured by Sakai Chemical Industry Co., Ltd.)
Anti-aging agent 6C (trade name "Nocrac 6C" manufactured by Ouchi Shinko Chemical Industrial Co., Ltd. )
Anti-aging agent TMQ (trade name "Nocrac 224" manufactured by Ouchi Shinko Chemical Industrial Co., Ltd. )
Cobalt salt (trade name "MANOBOND C22.5" manufactured by OMG Americas, Inc.)

<Zinc Powder>

Zinc powder (trade name "Zinc Oxide" manufactured by Sakai Chemical Industry Co., Ltd.)

<Vulcanization Accelerator>

DPG (1,3-diphenylguanidine) (trade name "Nocceler D-P" manufactured by Ouchi Shinko Chemical Industrial Co., Ltd. )
CBS (N-cyclohexyl-2-benzothiazylsulfenamide) (trade name "Nocceler CZ-G" manufactured by Ouchi Shinko Chemical Industrial Co., Ltd.)

<Insoluble Sulfur>

Insoluble sulfur ("MUCRON OT-20" manufactured by Shikoku Chemicals Corporation)

[Rubber Composition for Bead Filler]

(Examples 31 to 40) and (Comparative Example 4)

Respective components shown below were mixed to obtain rubber compositions.
A closed kneader (having an internal capacity of 0.5 L) equipped with a temperature controller was used to knead, as first stage kneading, a rubber component, a reinforcing filler, a silane coupling agent, an extender oil, a resin, stearic acid, a zinc powder and an anti-aging agent under conditions of a filling rate of 65% and a rotor speed of 50 to 90 rpm. Here, the temperature of the closed mixer was controlled to obtain a compound at a discharge temperature of 150 to 160°C.
Next, as second stage kneading, after the compound obtained as described above was cooled to room temperature, the resultant was kneaded again for improving dispersibility of the reinforcing filler. Also in this case, the discharge temperature of the compound was adjusted to 150 to 160°C by the temperature control of the mixer.

After cooling, as third stage kneading, the resultant was kneaded with a vulcanization accelerator, a curing agent, and insoluble sulfur added thereto with an open roll set to 70°C.

Thereafter, the resultant was molded, and vulcanized with a vulcanization press under conditions of 160°C and 20 to 35 minutes. The rubber composition after the vulcanization was evaluated by the following methods.

Results of evaluation 1 and evaluation 2 are shown in Table 7.

(Blended Materials of Rubber Composition for Bead Filler)

<Rubber Component>

Rubber-like polymers 1 to 5: rubber-like polymers obtained in Polymerization Examples
NR: natural rubber RSS No. 3 (producer: UNIMAC RUBBER CO., LTD. (Thailand), supplier: Marubeni Techno Rubber Corporation)
SBR: styrene butadiene rubber (trade name "Nipol 1502" manufactured by Zeon Corporation))

<Reinforcing Filler>

Carbon black (trade name "Seast KH (N339)" manufactured by Tokai Carbon Co., Ltd., nitrogen adsorption specific surface area: 93 $m^2$/g)
Silica (trade name "ULTRASIL 7000GR" manufactured by Evonik Degussa Japan Co., Ltd., nitrogen adsorption specific surface area: 175 $m^2$/g)

<Silane Coupling Agent>

Silane coupling agent (trade name "Si75" manufactured by Evonik Degussa Japan Co., Ltd., bis(triethoxysilylpropyl) disulfide)

<Resin>

Cashew-modified phenol resin ("SUMILITERESIN PR-NR-1" manufactured by Sumitomo Bakelite Co., Ltd.)

<Extender Oil>

Mineral oil: "Process Oil PF30" (SRAE oil) manufactured by JXTG Nippon Oil & Energy Corporation

<Chemical>

Stearic acid (trade name "Lunac S-90V" manufactured by Kao Corporation)
Zinc powder (trade name "Zinc Oxide" manufactured by Sakai Chemical Industry Co., Ltd.)
Anti-aging agent 6C (trade name "Nocrac 6C" manufactured by Ouchi Shinko Chemical Industrial Co., Ltd. )

<Vulcanization Accelerator>

DPG (1,3-diphenylguanidine) (trade name "Nocceler D-P" manufactured by Ouchi Shinko Chemical Industrial Co., Ltd. )
TBBS (N-tert-butylbenzothiazole-2-sulfenamide) (trade name "Sanceler NS-G" manufactured by Sanshin Chemical Industry Co., Ltd.)

<Curing Agent>

Hexamethylene tetramine (trade name "Nocceler H" manufactured by Ouchi Shinko Chemical Industrial Co., Ltd.

<Insoluble Sulfur>

Insoluble sulfur ("MUCRON OT-20" manufactured by Shikoku Chemicals Corporation)

[Evaluation of Rubber Composition]

((Evaluation 1) Fuel Economy)

A necessary test piece was punched out from each obtained vulcanized rubber composition, and a viscoelastic parameter was measured in the torsional mode using a viscoelastic tester "ARES" manufactured by Rheometric Scientific.
tan$\delta$ measured at 50°C, a frequency of 10 Hz, and a strain of 3% was used as an index for low fuel consumption.
Respective measurement values were used, and measurement results were summarized.
The results about the rubber composition of Comparative Example 1 in Table 4, the results about the rubber composition of Comparative Example 2 in Table 5, the results about the rubber composition of Comparative Example 3 in Table 6, and the results about the rubber composition of Comparative Example 4 in Table 7 were each given △, and the results were given O when the effect was improved by 5% or more and less than 10%, the results were given ◎ when the effect was improved by 10% or more and less than 20%, and the results were given ◎◎ when the effect was improved by 20% or more.
Also, the results were given △ when the effect was improved or deteriorated by 0% or more and less than 5%, the results were given × when the effect was deteriorated by 5% or more and less than 10%, and the results were given × × when the effect was deteriorated by 10% or more.

((Evaluation 2) Mechanical Strength (Tensile Energy))

Each obtained vulcanized rubber composition was used for evaluating tensile energy by the following test method.

<Measurement of Tensile Energy>

A JIS No. 3 dumbbell test piece was punched out from each obtained vulcanized rubber composition after vulcanization, and was subjected to a tensile test at a tensile speed of 500 mm/min in accordance with JIS K 6251: 2010, and stresses from a zero strain to a strain at break in the obtained stress-strain curve were integrated to measure tensile energy.
Respective measurement values were used, and measurement results were summarized.
The results about the rubber composition of Comparative Example 1 in Table 4, the results about the rubber composition of Comparative Example 2 in Table 5, the results about the rubber composition of Comparative Example 3 in Table 6, and the results about the rubber composition of Comparative Example 4 in Table 7 were each given △, and the results were given O when the effect was improved by 5% or more and less than 10%, the results were given ◎ when the effect was improved by 10% or more and less than 20%, and the results were given ◎◎ when the effect was improved by 20% or more. Also, the results were given △ when the effect was improved or deteriorated by 0% or more and less than 5%, the results were given × when the effect was deteriorated by 5% or more and less than 10%, and the results were given × × when the effect was deteriorated by 10% or more.

((Evaluation 3) Ozone Resistance)

Each obtained vulcanized rubber composition was used for evaluating ozone resistance by the following test method.

<Evaluation of Ozone Resistance>

Each vulcanized rubber composition was subjected to vulcanization pressing with a prescribed mold (15 cm long, 15 cm wide, and 2.0 mm thick) under conditions of 160°C and 15 to 30 minutes to obtain a vulcanized rubber sheet. A strip sample (6 cm long, 1 cm wide, and 2.0 mm thick) was punched out from this vulcanized rubber sheet, placed in an ozone tank (50°C, 100 pphm), and left standing for 48 hours in the state of 40% elongation. Thereafter, the strip sample (vulcanized rubber sheet) was observed, and the number of cracks having a length of 1 mm or more on the surface was counted and evaluated according to the following criteria.

The determination criteria and evaluation results are shown in Table 4 (ozone resistance)

[Determination Criteria]

$\times$: the vulcanized rubber sheet was broken.
$\triangle$: 21 or more cracks of 1 mm or more
$\bigcirc$: 10 or more and 20 or less cracks of 1 mm or more
$\circledcirc$: 1 or more and less than 10 cracks of 1 mm or more
$\circledcirc\circledcirc$: no crack of 1 mm or more

((Evaluation 4) Storage Stability)

Prescribed raw materials in Tables 8 to 13 were kneaded to obtain compounds, which were then vulcanized 1 day later and subjected to the measurement of ((Evaluation 2) Mechanical Strength (Tensile Energy)) described above. The obtained measurement results were designated as (a).

Prescribed raw materials in Tables 8 to 13 were kneaded to obtain compounds, which were then vulcanized 7 days later and subjected to the measurement of ((Evaluation 2) Mechanical Strength (Tensile Energy)) described above. The obtained measurement results were designated as (b).

From these results (a) and (b), evaluation was performed according to the following criteria.

[Determination Criteria]

$\times$: 20% or more difference between (a) and (b)
$\triangle$: 10% or more and less than 20% difference between (a) and (b)
$\bigcirc$: 5% or more and less than 10% difference between (a) and (b)
$\circledcirc$: less than 5% difference between (a) and (b)

[Table 4]

| Raw Material (parts by mass) | Remarks | Comparative Example 1 | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| NR | | 30 | 30 | 30 | 30 | 30 | 30 | 30 | 30 | 30 | 50 | 50 |
| BR | | 70 | 40 | 40 | 40 | | 40 | 40 | 40 | | | |
| Rubber-like Polymer 1 | | | 30 | | | | 30 | | | | | |
| Rubber-like Polymer 2 | | | | 30 | | | | 30 | | | | |
| Rubber-like Polymer 3 | | | | | 30 | 70 | | | 30 | 70 | | |
| Rubber-like Polymer 4 | | | | | | | | | | | 50 | |
| Rubber-like Polymer 5 | | | | | | | | | | | | 50 |
| Carbon black | FEF | 50 | 50 | 50 | 50 | 50 | 25 | 25 | 25 | 25 | 50 | 50 |
| Silica | | | | | | | 25 | 25 | 25 | 25 | | |
| Silane Coupling Agent | | | | | | | 2 | 2 | 2 | 2 | | |
| SRAE Oil | | 10 | 10 | 10 | 10 | 10 | 10 | 10 | 10 | 10 | 10 | 10 |
| Stearic Acid | | 2 | 2 | 2 | 2 | 2 | 2 | 2 | 2 | 2 | 2 | 2 |
| Anti-aging Agent (1) | 6C | 3 | 3 | 3 | 3 | 3 | 3 | 3 | 3 | 3 | 3 | 3 |

(continued)

| Raw Material (parts by mass) | Remarks | Comparative Example 1 | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Wax | | 1.5 | 1.5 | 1.5 | 1.5 | 1.5 | 1.5 | 1.5 | 1.5 | 1.5 | 1.5 | 1.5 |
| Zinc Powder | | 3 | 3 | 3 | 3 | 3 | 3 | 3 | 3 | 3 | 3 | 3 |
| DPG | | | | | | | 0.4 | 0.4 | 0.4 | 0.4 | | |
| TBBS (NS) | | 0.8 | 0.8 | 0.8 | 0.8 | 0.8 | 0.8 | 0.8 | 0.8 | 0.8 | 0.8 | 0.8 |
| Sulfur (1) | Powdered Sulfur | 1.5 | 1.5 | 1.5 | 1.5 | 1.5 | 1.5 | 1.5 | 1.5 | 1.5 | 1.5 | 1.5 |
| Effect | Fuel Economy | Δ | ◎ | ○ | ○ | ○ | ◎◎ | ◎ | ◎ | ◎ | ◎ | ○ |
| | Mechanical Strength | Δ | Δ | ○ | ◎ | ◎◎ | Δ | ○ | ◎ | ◎◎ | ○ | ◎ |
| | Ozone Resistance | Δ | Δ | ○ | ◎ | ◎◎ | Δ | ○ | ◎ | ◎◎ | ○ | ◎ |

[Table 5]

| Raw Material (parts by mass) | Remarks | Comparative Example 2 | Example 11 | Example 12 | Example 13 | Example 14 | Example 15 | Example 16 | Example 17 | Example 18 | Example 19 | Example 20 |
|---|---|---|---|---|---|---|---|---|---|---|---|---|
| NR | | 40 | 40 | 40 | 40 | 40 | 40 | 40 | 40 | 40 | 60 | 60 |
| BR | | 60 | 30 | 30 | 30 | | 30 | 30 | 30 | | | |
| Rubber-like Polymer 1 | | | 30 | | | | 30 | | | | | |
| Rubber-like Polymer 2 | | | | 30 | | | | 30 | | | | |
| Rubber-like Polymer 3 | | | | | 30 | 60 | | | 30 | 60 | | |
| Rubber-like Polymer 4 | | | | | | | | | | | 40 | |
| Rubber-like Polymer 5 | | | | | | | | | | | | 40 |
| Carbon black | HAF | 70 | 70 | 70 | 70 | 70 | 35 | 35 | 35 | 35 | 70 | 70 |
| Silica | | | | | | | 35 | 35 | 35 | 35 | | |
| Silane Coupling Agent | | | | | | | 2.8 | 2.8 | 2.8 | 2.8 | | |
| SRAE Oil | | 3 | 3 | 3 | 3 | 3 | 3 | 3 | 3 | 3 | 3 | 3 |
| Resin | | 2 | 2 | 2 | 2 | 2 | 2 | 2 | 2 | 2 | 2 | 2 |
| Stearic Acid | | 2 | 2 | 2 | 2 | 2 | 2 | 2 | 2 | 2 | 2 | 2 |

| Raw Material (parts by mass) | Remarks | Comparative Example 2 | Example 11 | Example 12 | Example 13 | Example 14 | Example 15 | Example 16 | Example 17 | Example 18 | Example 19 | Example 20 |
|---|---|---|---|---|---|---|---|---|---|---|---|---|
| Anti-aging Agent (1) | 6C | 1 | 1 | 1 | 1 | 1 | 1 | 1 | 1 | 1 | 1 | 1 |
| Zinc Powder | | 3 | 3 | 3 | 3 | 3 | 3 | 3 | 3 | 3 | 3 | 3 |
| DPG | | | | | | | 0.6 | 0.6 | 0.6 | 0.6 | | |
| TBBS (NS) | | 0.8 | 0.8 | 0.8 | 0.8 | 0.8 | 0.8 | 0.8 | 0.8 | 0.8 | 0.8 | 0.8 |
| Sulfur (1) | Powdered Sulfur | 2 | 2 | 2 | 2 | 2 | 2 | 2 | 2 | 2 | 2 | 2 |
| Effect | Fuel Economy | Δ | ◎ | ○ | ○ | ○ | ◎◎ | ◎ | ◎ | ◎ | ◎ | ○ |
| | Mechanical Strength | Δ | Δ | ○ | ◎ | ◎◎ | Δ | ○ | ◎ | ◎◎ | ○ | ◎ |

EP 4 275 914 A1

[Table 6]

| Raw Material (parts by mass) | Remarks | Comparative Example 3 | Example 21 | Example 22 | Example 23 | Example 24 | Example 25 | Example 26 | Example 27 | Example 28 | Example 29 | Example 30 |
|---|---|---|---|---|---|---|---|---|---|---|---|---|
| NR | | 100 | 70 | 70 | 70 | 30 | 70 | 70 | 70 | 30 | 50 | 50 |
| Rubber-like Polymer 1 | | | 30 | | | | 30 | | | | | |
| Rubber-like Polymer 2 | | | | 30 | | 70 | | 30 | | 70 | | |
| Rubber-like Polymer 3 | | | | | 30 | | | | 30 | | | |
| Rubber-like Polymer 4 | | | | | | | | | | | 50 | |
| Rubber-like Polymer 5 | | | | | | | | | | | | 50 |
| Carbon black | HAF | 60 | 60 | 60 | 60 | 60 | 30 | 30 | 30 | 30 | 60 | 60 |
| Silica | | | | | | | 30 | 30 | 30 | 30 | | |
| Silane Coupling Agent | | | | | | | 2.4 | 2.4 | 2.4 | 2.4 | | |
| Spindle Oil | | 5 | 5 | 5 | 5 | 5 | 5 | 5 | 5 | 5 | 5 | 5 |
| Zinc Powder | | 5 | 5 | 5 | 5 | 5 | 5 | 5 | 5 | 5 | 5 | 5 |
| Anti-aging Agent (1) | 6C | 1 | 1 | 1 | 1 | 1 | 1 | 1 | 1 | 1 | 1 | 1 |

(continued)

| Raw Material (parts by mass) | Remarks | Comparative Example 3 | Example 21 | Example 22 | Example 23 | Example 24 | Example 25 | Example 26 | Example 27 | Example 28 | Example 29 | Example 30 |
|---|---|---|---|---|---|---|---|---|---|---|---|---|
| Anti-aging Agent (2) | TMQ | 2 | 2 | 2 | 2 | 2 | 2 | 2 | 2 | 2 | 2 | 2 |
| Cobalt Salt | | 0.7 | 0.7 | 0.7 | 0.7 | 0.7 | 0.7 | 0.7 | 0.7 | 0.7 | 0.7 | 0.7 |
| Zinc Powder | | 2.5 | 2.5 | 2.5 | 2.5 | 2.5 | 2.5 | 2.5 | 2.5 | 2.5 | 2.5 | 2.5 |
| DPG | | | | | | | 0.5 | 0.5 | 0.5 | 0.5 | | |
| CBS(CZ) | | 1 | 1 | 1 | 1 | 1 | 1 | 1 | 1 | 1 | 1 | 1 |
| Sulfur (2) | Insoluble Sulfur | 5 | 5 | 5 | 5 | 5 | 5 | 5 | 5 | 5 | 5 | 5 |
| Effect | Fuel Economy | Δ | ◎ | ○ | ○ | ◎ | ◎◎ | ◎ | ◎ | ◎◎ | ◎ | ○ |
| | Mechanical Strength | Δ | Δ | Δ | ○ | ○ | Δ | Δ | ○ | ○ | Δ | ○ |

EP 4 275 914 A1

[Table 7]

| Raw Material (parts by mass) | Remarks | Comparative Example 4 | Example 31 | Example 32 | Example 33 | Example 34 | Example 35 | Example 36 | Example 37 | Example 38 | Example 39 | Example 40 |
|---|---|---|---|---|---|---|---|---|---|---|---|---|
| NR | | 70 | 40 | 40 | 40 | 40 | 40 | 40 | 40 | 40 | 50 | 50 |
| SBR | | 30 | 30 | 30 | 30 | | 30 | 30 | 30 | | 20 | 20 |
| Rubber-like Polymer 1 | | | 30 | | | | | 30 | | | | |
| Rubber-like Polymer 2 | | | | 30 | | 60 | | | 30 | | 60 | |
| Rubber-like Polymer 3 | | | | | | 30 | | | | 30 | | |
| Rubber-like Polymer 4 | | | | | | | | | | | | 30 | |
| Rubber-like Polymer 5 | | | | | | | | | | | | | 30 |
| Carbon black | HAF | 70 | 70 | 70 | 70 | 70 | 35 | 35 | 35 | 35 | 70 | 70 |
| Silica | | | | | | | 35 | 35 | 35 | 35 | | |
| Silane Coupling Agent | | | | | | | 2.8 | 2.8 | 2.8 | 2.8 | | |
| SRAE Oil | | 4 | 4 | 4 | 4 | 4 | 4 | 4 | 4 | 4 | 4 | 4 |
| Resin | Phenol Resin | 15 | 15 | 15 | 15 | 15 | 15 | 15 | 15 | 15 | 15 | 15 |
| Stearic Acid | | 2.5 | 2.5 | 2.5 | 2.5 | 2.5 | 2.5 | 2.5 | 2.5 | 2.5 | 2.5 | 2.5 |

(continued)

| Raw Material (parts by mass) | Remarks | Comparative Example 4 | Example 31 | Example 32 | Example 33 | Example 34 | Example 35 | Example 36 | Example 37 | Example 38 | Example 39 | Example 40 |
|---|---|---|---|---|---|---|---|---|---|---|---|---|
| Zinc Powder | | 8 | 8 | 8 | 8 | 8 | 8 | 8 | 8 | 8 | 8 | 8 |
| Anti-aging Agent (1) | 6C | 1 | 1 | 1 | 1 | 1 | 1 | 1 | 1 | 1 | 1 | 1 |
| DPG | | | | | | | 1 | 1 | 1 | 1 | | |
| TBBS (NS) | | 2 | 2 | 2 | 2 | 2 | 2 | 2 | 2 | 2 | 2 | 2 |
| Curing agent | | 1.5 | 1.5 | 1.5 | 1.5 | 1.5 | 1.5 | 1.5 | 1.5 | 1.5 | 1.5 | 1.5 |
| Sulfur (2) | Insoluble Sulfur | 4.5 | 4.5 | 4.5 | 4.5 | 4.5 | 4.5 | 4.5 | 4.5 | 4.5 | 4.5 | 4.5 |
| Effect | Fuel Economy | Δ | ◎ | ○ | ○ | ◎ | ◎◎ | ◎ | ◎ | ◎◎ | ◎ | ○ |
| | Mechanical Strength | Δ | Δ | Δ | ○ | ○ | Δ | Δ | ○ | ○ | ○ | ◎ |

[Table 8]

| Raw Material (parts by mass) | Remarks | Comparative Example 5 | Example 41 | Example 42 | Example 43 | Example 44 | Example 45 |
|---|---|---|---|---|---|---|---|
| NR | | 50 | 30 | 30 | 30 | 30 | 30 |
| BR | | 50 | 40 | 40 | 40 | 40 | 40 |
| Rubber-like Polymer 1 | | | 30 | | | | |
| Rubber-like Polymer 2 | | | | 30 | | | |
| Rubber-like Polymer 3 | | | | | 30 | | |
| Rubber-like Polymer 4 | | | | | | 30 | |
| Rubber-like Polymer 5 | | | | | | | 30 |
| Rubber-like Polymer 6 | | | | | | | |
| Rubber-like Polymer 7 | | | | | | | |
| Rubber-like Polymer 8 | | | | | | | |
| Rubber-like Polymer 9 | | | | | | | |
| Rubber-like Polymer 10 | | | | | | | |
| Rubber-like Polymer 11 | | | | | | | |
| Rubber-like Polymer 12 | | | | | | | |
| Rubber-like Polymer 13 | | | | | | | |
| Rubber-like Polymer 14 | | | | | | | |
| Rubber-like Polymer 15 | | | | | | | |
| Rubber-like Polymer 16 | | | | | | | |
| Rubber-like Polymer 17 | | | | | | | |
| Rubber-like Polymer 18 | | | | | | | |
| Rubber-like Polymer 19 | | | | | | | |
| Rubber-like Polymer 20 | | | | | | | |

(continued)

| Raw Material (parts by mass) | Remarks | Comparative Example 5 | Example 41 | Example 42 | Example 43 | Example 44 | Example 45 |
|---|---|---|---|---|---|---|---|
| Rubber-like Polymer 21 | | | | | | | |
| Rubber-like Polymer 22 | | | | | | | |
| Rubber-like Polymer 23 | | | | | | | |
| Rubber-like Polymer 24 | | | | | | | |
| Rubber-like Polymer 25 | | | | | | | |
| Rubber-like Polymer 26 | | | | | | | |
| Rubber-like Polymer 27 | | | | | | | |
| Rubber-like Polymer 28 | | | | | | | |
| Carbon black | FEF | 50 | 50 | 50 | 50 | 50 | 50 |
| SRAE Oil | | 10 | 10 | 10 | 10 | 10 | 10 |
| Stearic Acid | | 2 | 2 | 2 | 2 | 2 | 2 |
| Anti-aging Agent (1) | 6C | 1.5 | 1.5 | 1.5 | 1.5 | 1.5 | 1.5 |
| Wax | | 1 | 1 | 1 | 1 | 1 | 1 |
| Zinc Powder | | 3 | 3 | 3 | 3 | 3 | 3 |
| TBBS (NS) | | 1 | 1 | 1 | 1 | 1 | 1 |
| Sulfur (1) | Powdered Sulfur | 2 | 2 | 2 | 2 | 2 | 2 |
| Effect | Fuel Economy | Δ | ◎ | ○ | Δ | ◎ | Δ |
| | Mechanical Strength | Δ | Δ | ○ | ◎ | Δ | ◎ |
| | Ozone resistance | Δ | ○ | ○ | ○ | Δ | ○ |
| | Storage stability | Δ | ◎ | ◎ | ◎ | ◎ | ◎ |

[Table 9]

| Raw Material (parts by mass) | Remarks | Example 46 | Example 47 | Example 48 | Example 49 | Example 50 | Example 51 |
|---|---|---|---|---|---|---|---|
| NR | | 20 | 20 | 50 | 50 | 60 | 60 |
| BR | | 40 | 40 | 20 | 20 | 30 | 30 |
| Rubber-like Polymer 1 | | 40 | | 30 | | 10 | |

(continued)

| Raw Material (parts by mass) | Remarks | Example 46 | Example 47 | Example 48 | Example 49 | Example 50 | Example 51 |
|---|---|---|---|---|---|---|---|
| Rubber-like Polymer 2 | | | 40 | | 30 | | 10 |
| Rubber-like Polymer 3 | | | | | | | |
| Rubber-like Polymer 4 | | | | | | | |
| Rubber-like Polymer 5 | | | | | | | |
| Rubber-like Polymer 6 | | | | | | | |
| Rubber-like Polymer 7 | | | | | | | |
| Rubber-like Polymer 8 | | | | | | | |
| Rubber-like Polymer 9 | | | | | | | |
| Rubber-like Polymer 10 | | | | | | | |
| Rubber-like Polymer 11 | | | | | | | |
| Rubber-like Polymer 12 | | | | | | | |
| Rubber-like Polymer 13 | | | | | | | |
| Rubber-like Polymer 14 | | | | | | | |
| Rubber-like Polymer 15 | | | | | | | |
| Rubber-like Polymer 16 | | | | | | | |
| Rubber-like Polymer 17 | | | | | | | |
| Rubber-like Polymer 18 | | | | | | | |
| Rubber-like Polymer 19 | | | | | | | |
| Rubber-like Polymer 20 | | | | | | | |
| Rubber-like Polymer 21 | | | | | | | |
| Rubber-like Polymer 22 | | | | | | | |
| Rubber-like Polymer 23 | | | | | | | |

(continued)

| Raw Material (parts by mass) | Remarks | Example 46 | Example 47 | Example 48 | Example 49 | Example 50 | Example 51 |
|---|---|---|---|---|---|---|---|
| Rubber-like Polymer 24 | | | | | | | |
| Rubber-like Polymer 25 | | | | | | | |
| Rubber-like Polymer 26 | | | | | | | |
| Rubber-like Polymer 27 | | | | | | | |
| Rubber-like Polymer 28 | | | | | | | |
| Carbon black | FEF | 50 | 50 | 50 | 50 | 50 | 50 |
| SRAE Oil | | 10 | 10 | 10 | 10 | 10 | 10 |
| Stearic Acid | | 2 | 2 | 2 | 2 | 2 | 2 |
| Anti-aging Agent (1) | 6C | 1.5 | 1.5 | 1.5 | 1.5 | 1.5 | 1.5 |
| Wax | | 1 | 1 | 1 | 1 | 1 | 1 |
| Zinc Powder | | 3 | 3 | 3 | 3 | 3 | 3 |
| TBBS (NS) | | 1 | 1 | 1 | 1 | 1 | 1 |
| Sulfur (1) | Powdered Sulfur | 2 | 2 | 2 | 2 | 2 | 2 |
| Effect | Fuel Economy | ◎ | ◎ | ○ | Δ | Δ | Δ |
| | Mechanical Strength | Δ | Δ | ○ | ◎ | ◎ | ◎ |
| | Ozone resistance | ○ | ○ | Δ | Δ | Δ | Δ |
| | Storage stability | ◎ | ◎ | ◎ | ◎ | ◎ | ◎ |

[Table 10]

| Raw Material (parts by mass) | Remarks | Example 52 | Example 53 | Example 54 | Example 55 | Example 56 | Example 57 |
|---|---|---|---|---|---|---|---|
| NR | | 30 | 30 | 30 | 30 | 30 | 30 |
| BR | | 40 | 40 | 40 | 40 | 40 | 40 |
| Rubber-like Polymer 1 | | | | | | | |
| Rubber-like Polymer 2 | | | | | | | |
| Rubber-like Polymer 3 | | | | | | | |
| Rubber-like Polymer 4 | | | | | | | |

(continued)

| Raw Material (parts by mass) | Remarks | Example 52 | Example 53 | Example 54 | Example 55 | Example 56 | Example 57 |
|---|---|---|---|---|---|---|---|
| Rubber-like Polymer 5 | | | | | | | |
| Rubber-like Polymer 6 | | 30 | | | | | |
| Rubber-like Polymer 7 | | | 30 | | | | |
| Rubber-like Polymer 8 | | | | 30 | | | |
| Rubber-like Polymer 9 | | | | | 30 | | |
| Rubber-like Polymer 10 | | | | | | 30 | |
| Rubber-like Polymer 11 | | | | | | | 30 |
| Rubber-like Polymer 12 | | | | | | | |
| Rubber-like Polymer 13 | | | | | | | |
| Rubber-like Polymer 14 | | | | | | | |
| Rubber-like Polymer 15 | | | | | | | |
| Rubber-like Polymer 16 | | | | | | | |
| Rubber-like Polymer 17 | | | | | | | |
| Rubber-like Polymer 18 | | | | | | | |
| Rubber-like Polymer 19 | | | | | | | |
| Rubber-like Polymer 20 | | | | | | | |
| Rubber-like Polymer 21 | | | | | | | |
| Rubber-like Polymer 22 | | | | | | | |
| Rubber-like Polymer 23 | | | | | | | |
| Rubber-like Polymer 24 | | | | | | | |
| Rubber-like Polymer 25 | | | | | | | |
| Rubber-like Polymer 26 | | | | | | | |

(continued)

| Raw Material (parts by mass) | Remarks | Example 52 | Example 53 | Example 54 | Example 55 | Example 56 | Example 57 |
|---|---|---|---|---|---|---|---|
| Rubber-like Polymer 27 | | | | | | | |
| Rubber-like Polymer 28 | | | | | | | |
| Carbon black | FEF | 50 | 50 | 50 | 50 | 50 | 50 |
| SRAE Oil | | 10 | 10 | 10 | 10 | 10 | 10 |
| Stearic Acid | | 2 | 2 | 2 | 2 | 2 | 2 |
| Anti-aging Agent (1) | 6C | 1.5 | 1.5 | 1.5 | 1.5 | 1.5 | 1.5 |
| Wax | | 1 | 1 | 1 | 1 | 1 | 1 |
| Zinc Powder | | 3 | 3 | 3 | 3 | 3 | 3 |
| TBBS (NS) | | 1 | 1 | 1 | 1 | 1 | 1 |
| Sulfur (1) | Powdered Sulfur | 2 | 2 | 2 | 2 | 2 | 2 |
| Effect | Fuel Economy | ◎ | ◎ | ◎ | ○ | ○ | ○ |
| | Mechanical Strength | Δ | ○ | Δ | ◎ | Δ | ○ |
| | Ozone resistance | Δ | ○ | Δ | ○ | Δ | ○ |
| | Storage stability | ◎ | ◎ | ◎ | ◎ | ◎ | ◎ |

[Table 11]

| Raw Material (parts by mass) | Remarks | Example 58 | Comparative Example 6 | Example 59 | Comparative Example 7 | Comparative Example 8 | Example 60 |
|---|---|---|---|---|---|---|---|
| NR | | 30 | 30 | 30 | 30 | 30 | 30 |
| BR | | 40 | 40 | 40 | 40 | 40 | 40 |
| Rubber-like Polymer 1 | | | | | | | |
| Rubber-like Polymer 2 | | | | | | | |
| Rubber-like Polymer 3 | | | | | | | |
| Rubber-like Polymer 4 | | | | | | | |
| Rubber-like Polymer 5 | | | | | | | |
| Rubber-like Polymer 6 | | | | | | | |

(continued)

| Raw Material (parts by mass) | Remarks | Example 58 | Comparative Example 6 | Example 59 | Comparative Example 7 | Comparative Example 8 | Example 60 |
|---|---|---|---|---|---|---|---|
| Rubber-like Polymer 7 | | | | | | | |
| Rubber-like Polymer 8 | | | | | | | |
| Rubber-like Polymer 9 | | | | | | | |
| Rubber-like Polymer 10 | | | | | | | |
| Rubber-like Polymer 11 | | | | | | | |
| Rubber-like Polymer 12 | | 30 | | | | | |
| Rubber-like Polymer 13 | | | 30 | | | | |
| Rubber-like Polymer 14 | | | | 30 | | | |
| Rubber-like Polymer 15 | | | | | 30 | | |
| Rubber-like Polymer 16 | | | | | | 30 | |
| Rubber-like Polymer 17 | | | | | | | 30 |
| Rubber-like Polymer 18 | | | | | | | |
| Rubber-like Polymer 19 | | | | | | | |
| Rubber-like Polymer 20 | | | | | | | |
| Rubber-like Polymer 21 | | | | | | | |
| Rubber-like Polymer 22 | | | | | | | |
| Rubber-like Polymer 23 | | | | | | | |
| Rubber-like Polymer 24 | | | | | | | |
| Rubber-like Polymer 25 | | | | | | | |
| Rubber-like Polymer 26 | | | | | | | |
| Rubber-like Polymer 27 | | | | | | | |

(continued)

| Raw Material (parts by mass) | Remarks | Example 58 | Comparative Example 6 | Example 59 | Comparative Example 7 | Comparative Example 8 | Example 60 |
|---|---|---|---|---|---|---|---|
| Rubber-like Polymer 28 | | | | | | | |
| Carbon black | FEF | 50 | 50 | 50 | 50 | 50 | 50 |
| SRAE Oil | | 10 | 10 | 10 | 10 | 10 | 10 |
| Stearic Acid | | 2 | 2 | 2 | 2 | 2 | 2 |
| Anti-aging Agent (1) | 6C | 1.5 | 1.5 | 1.5 | 1.5 | 1.5 | 1.5 |
| Wax | | 1 | 1 | 1 | 1 | 1 | 1 |
| Zinc Powder | | 3 | 3 | 3 | 3 | 3 | 3 |
| TBBS (NS) | | 1 | 1 | 1 | 1 | 1 | 1 |
| Sulfur (1) | Powdered Sulfur | 2 | 2 | 2 | 2 | 2 | 2 |
| Effect | Fuel Economy | ○ | ○ | ○ | ○ | ○ | ○ |
| | Mechanical Strength | Δ | × | Δ | × | × | Δ |
| | Ozone resistance | Δ | Δ | ○ | ○ | Δ | ○ |
| | Storage stability | × | × | × | × | × | × |

[Table 12]

| Raw Material (parts by mass) | Remarks | Example 61 | Example 62 | Example 63 | Comparative Example 9 | Example 64 | Example 65 |
|---|---|---|---|---|---|---|---|
| NR | | 30 | 30 | 30 | 30 | 30 | 30 |
| BR | | 40 | 40 | 40 | 40 | 40 | 40 |
| Rubber-like Polymer 1 | | | | | | | |
| Rubber-like Polymer 2 | | | | | | | |
| Rubber-like Polymer 3 | | | | | | | |
| Rubber-like Polymer 4 | | | | | | | |
| Rubber-like Polymer 5 | | | | | | | |
| Rubber-like Polymer 6 | | | | | | | |

(continued)

| Raw Material (parts by mass) | Remarks | Example 61 | Example 62 | Example 63 | Comparative Example 9 | Example 64 | Example 65 |
|---|---|---|---|---|---|---|---|
| Rubber-like Polymer 7 | | | | | | | |
| Rubber-like Polymer 8 | | | | | | | |
| Rubber-like Polymer 9 | | | | | | | |
| Rubber-like Polymer 10 | | | | | | | |
| Rubber-like Polymer 11 | | | | | | | |
| Rubber-like Polymer 12 | | | | | | | |
| Rubber-like Polymer 13 | | | | | | | |
| Rubber-like Polymer 14 | | | | | | | |
| Rubber-like Polymer 15 | | | | | | | |
| Rubber-like Polymer 16 | | | | | | | |
| Rubber-like Polymer 17 | | | | | | | |
| Rubber-like Polymer 18 | | 30 | | | | | |
| Rubber-like Polymer 19 | | | 30 | | | | |
| Rubber-like Polymer 20 | | | | 30 | | | |
| Rubber-like Polymer 21 | | | | | 30 | | |
| Rubber-like Polymer 22 | | | | | | 30 | |
| Rubber-like Polymer 23 | | | | | | | 30 |
| Rubber-like Polymer 24 | | | | | | | |
| Rubber-like Polymer 25 | | | | | | | |
| Rubber-like Polymer 26 | | | | | | | |
| Rubber-like Polymer 27 | | | | | | | |
| Rubber-like Polymer 28 | | | | | | | |

(continued)

| Raw Material (parts by mass) | Remarks | Example 61 | Example 62 | Example 63 | Comparative Example 9 | Example 64 | Example 65 |
|---|---|---|---|---|---|---|---|
| Carbon black | FEF | 50 | 50 | 50 | 50 | 50 | 50 |
| SRAE Oil | | 10 | 10 | 10 | 10 | 10 | 10 |
| Stearic Acid | | 2 | 2 | 2 | 2 | 2 | 2 |
| Anti-aging Agent (1) | 6C | 1.5 | 1.5 | 1.5 | 1.5 | 1.5 | 1.5 |
| Wax | | 1 | 1 | 1 | 1 | 1 | 1 |
| Zinc Powder | | 3 | 3 | 3 | 3 | 3 | 3 |
| TBBS (NS) | | 1 | 1 | 1 | 1 | 1 | 1 |
| Sulfur (1) | Powdered Sulfur | 2 | 2 | 2 | 2 | 2 | 2 |
| Effect | Fuel Economy | Δ | Δ | ○ | × | Δ | ○ |
| | Mechanical Strength | Δ | Δ | Δ | × | Δ | Δ |
| | Ozone resistance | Δ | ○ | ○ | Δ | Δ | Δ |
| | Storage stability | × | × | ◎ | ◎ | ◎ | ◎ |

[Table 13]

| Raw Material (parts by mass) | Remarks | Example 66 | Example 67 | Comparative Example 10 | Example 68 | Example 69 |
|---|---|---|---|---|---|---|
| NR | | 30 | 30 | 30 | 30 | 30 |
| BR | | 40 | 40 | 40 | 40 | 40 |
| Rubber-like Polymer 1 | | | | | | |
| Rubber-like Polymer 2 | | | | | | |
| Rubber-like Polymer 3 | | | | | | |
| Rubber-like Polymer 4 | | | | | | |
| Rubber-like Polymer 5 | | | | | | |
| Rubber-like Polymer 6 | | | | | | |
| Rubber-like Polymer 7 | | | | | | |
| Rubber-like Polymer 8 | | | | | | |
| Rubber-like Polymer 9 | | | | | | |
| Rubber-like Polymer 10 | | | | | | |
| Rubber-like Polymer 11 | | | | | | |
| Rubber-like Polymer 12 | | | | | | |

(continued)

| Raw Material (parts by mass) | Remarks | Example 66 | Example 67 | Comparative Example 10 | Example 68 | Example 69 |
|---|---|---|---|---|---|---|
| Rubber-like Polymer 13 | | | | | | |
| Rubber-like Polymer 14 | | | | | | |
| Rubber-like Polymer 15 | | | | | | |
| Rubber-like Polymer 16 | | | | | | |
| Rubber-like Polymer 17 | | | | | | |
| Rubber-like Polymer 18 | | | | | | |
| Rubber-like Polymer 19 | | | | | | |
| Rubber-like Polymer 20 | | | | | | |
| Rubber-like Polymer 21 | | | | | | |
| Rubber-like Polymer 22 | | | | | | |
| Rubber-like Polymer 23 | | | | | | |
| Rubber-like Polymer 24 | | 30 | | | | |
| Rubber-like Polymer 25 | | | 30 | | | |
| Rubber-like Polymer 26 | | | | 30 | | |
| Rubber-like Polymer 27 | | | | | 30 | |
| Rubber-like Polymer 28 | | | | | | 30 |
| Carbon black | FEF | 50 | 50 | 50 | 50 | 50 |
| SRAE Oil | | 10 | 10 | 10 | 10 | 10 |
| Stearic Acid | | 2 | 2 | 2 | 2 | 2 |
| Anti-aging Agent (1) | 6C | 1.5 | 1.5 | 1.5 | 1.5 | 1.5 |
| Wax | | 1 | 1 | 1 | 1 | 1 |
| Zinc Powder | | 3 | 3 | 3 | 3 | 3 |
| TBBS (NS) | | 1 | 1 | 1 | 1 | 1 |
| Sulfur (1) | Powdered Sulfur | 2 | 2 | 2 | 2 | 2 |

(continued)

| Raw Material (parts by mass) | Remarks | Example 66 | Example 67 | Comparative Example 10 | Example 68 | Example 69 |
|---|---|---|---|---|---|---|
| Effect | Fuel Economy | ◎ | ◎ | × | Δ | ◎ |
| | Mechanical Strength | Δ | Δ | × | ○ | Δ |
| | Ozone resistance | ○ | ○ | Δ | Δ | Δ |
| | Storage stability | ◎ | ◎ | ◎ | × | ◎ |

The present application is based on the Japanese patent application filed with the Japan Patent Office on January 7, 2021 (Japanese Patent Application No. 2021-001427) and the Japanese patent application filed with the Japan Patent Office on April 7, 2021 (Japanese Patent Application No. 2021-065420), the contents of which are incorporated herein by reference.

Industrial Applicability

The crosslinking rubber composition of the present embodiment is industrially applicable in the fields of tire members, interiors and exteriors of vehicles, antivibration rubbers, belts, shoes, foam materials, and various industrial products.

**Claims**

1. A crosslinking rubber composition, comprising:

   a rubber-like polymer (A) having an iodine value of 10 to 250 (g/100 g), comprising 3% by mass or more of an ethylene structure and less than 10% by mass of a vinyl aromatic monomer block, comprising a nitrogen atom, and having a modification ratio measured by column adsorption GPC of 40% by mass or more; and
   a crosslinking agent (B).

2. The crosslinking rubber composition according to claim 1, wherein
   the rubber-like polymer (A) comprises 35% by mass or less of a vinyl aromatic monomer unit.

3. The crosslinking rubber composition according to claim 1 or 2, wherein
   the rubber-like polymer (A) has a vinyl and butylene unit content of 20% by mol or more.

4. A rubber composition for a tire, comprising the crosslinking rubber composition according to any one of claims 1 to 3, the rubber composition for the tire comprising:

   100 parts by mass of a rubber component comprising 30 parts by mass or more of a natural rubber and 10 parts by mass or more of the rubber-like polymer (A); and
   the crosslinking agent (B).

5. The rubber composition for the tire according to claim 4, wherein
   a content of the rubber-like polymer (A) is 30 parts by mass or more in 100 parts by mass of the rubber component.

6. The rubber composition for the tire according to claim 4 or 5, further comprising
   carbon black having a nitrogen adsorption specific surface area ($N_2SA$) of 20 to 150 $m^2/g$ and/or a silica-based inorganic filler having a nitrogen adsorption specific surface area ($N_2SA$) of 110 to 220 $m^2/g$.

7. The rubber composition for the tire according to claim 6, wherein
   the rubber composition for the tire comprises:

100 parts by mass of the rubber component comprising 30 parts by mass or more of the natural rubber and 10 parts by mass or more of the rubber-like polymer (A);
30 to 90 parts by mass of the carbon black having a nitrogen adsorption specific surface area ($N_2SA$) of 20 to 150 $m^2/g$ and/or the silica-based inorganic filler having a nitrogen adsorption specific surface area ($N_2SA$) of 110 to 220 $m^2/g$; and
the crosslinking agent (B).

8. A molded article for a tire sidewall, comprising the crosslinking rubber composition according to any one of claims 1 to 3,
the molded article for the tire sidewall comprising:

100 parts by mass of a rubber component comprising 30 parts by mass or more of a natural rubber and 10 parts by mass or more of the rubber-like polymer (A);
30 to 70 parts by mass of carbon black having a nitrogen adsorption specific surface area ($N_2SA$) of 20 to 150 $m^2/g$ and/or a silica-based inorganic filler having a nitrogen adsorption specific surface area ($N_2SA$) of 110 to 220 $m^2/g$; and
the crosslinking agent (B).

9. A sheet comprising the crosslinking rubber composition according to any one of claims 1 to 3, wherein
the rubber-like polymer (A) has a glass transition temperature of -60°C or less and a weight average molecular weight of 200,000 or more.

10. The sheet according to claim 9, wherein
the sheet comprises 100 parts by mass of a rubber component comprising 30 parts by mass or more of a natural rubber, 10 parts by mass or more of a butadiene rubber, and 10 parts by mass or more of the rubber-like polymer (A).

11. The sheet according to claim 9 or 10, wherein
a content of the rubber-like polymer (A) is 30 parts by mass or more in 100 parts by mass of the rubber component.

12. The sheet according to any one of claims 9 to 11, further comprising
50 to 90 parts by mass of carbon black having a nitrogen adsorption specific surface area ($N_2SA$) of 20 to 150 $m^2/g$ and/or a silica-based inorganic filler having a nitrogen adsorption specific surface area ($N_2SA$) of 110 to 220 $m^2/g$ with respect to 100 parts by mass of the rubber component.

13. The sheet according to any one of claims 9 to 12, wherein
an SP value and the glass transition temperature Tg of the rubber-like polymer (A) satisfy

$$(-0.03 \times Tg + 14.4) < SP \ value < (-0.03 \times Tg + 15.4).$$

14. The sheet according to any one of claims 9 to 13, wherein
the sheet is a sheet for the tire sidewall.

15. A method for producing a tire sidewall, comprising:

a step of kneading the crosslinking rubber composition according to any one of claims 1 to 3, a natural rubber, and a butadiene rubber such that a content of the natural rubber is 30 parts by mass or more, a content of the butadiene rubber is 10 parts by mass or more, and a content of the rubber-like polymer (A) is 10 parts by mass or more, in 100 parts by mass of a rubber component;
a step of molding the resultant in the shape of a sheet; and
a step of crosslinking the obtained molded article in the shape of a sheet.

16. A tire sidewall comprising:

10 parts by mass or more of a rubber-like polymer (A) having an iodine value of 10 to 250 (g/100 g), comprising 3% by mass or more of an ethylene structure and less than 10% by mass of a vinyl aromatic monomer block, comprising a nitrogen atom, having a modification ratio measured by column adsorption GPC of 40% by mass or more, having a glass transition temperature of -60°C or less, and having a weight average molecular weight of 200,000 or more;
30 parts by mass or more of a natural rubber; and
10 parts by mass or more of a butadiene rubber, wherein
the tire sidewall has a structure where the rubber-like polymer (A), the natural rubber, and the butadiene rubber are crosslinked.

17. The tire sidewall according to claim 16, wherein
an SP value and the glass transition temperature Tg of the rubber-like polymer (A) satisfy

$$(-0.03 \times Tg + 14.4) < SP\ value < (-0.03 \times Tg + 15.4).$$

18. The tire sidewall according to claim 16 or 17, wherein
the tire sidewall comprises:

100 parts by mass of a rubber component comprising 10 parts by mass or more of the rubber-like polymer (A), 30 parts by mass or more of the natural rubber, and 10 parts by mass or more of the butadiene rubber;
50 to 90 parts by mass of carbon black having a nitrogen adsorption specific surface area ($N_2SA$) of 20 to 150 $m^2$/g and/or a silica-based inorganic filler having a nitrogen adsorption specific surface area ($N_2SA$) of 110 to 220 $m^2$/g; and
the crosslinking agent (B).

## INTERNATIONAL SEARCH REPORT

| International application No. |
|---|
| **PCT/JP2021/047600** |

**A. CLASSIFICATION OF SUBJECT MATTER**

*B60C 1/00*(2006.01)i; *C08C 19/02*(2006.01)i; *C08C 19/22*(2006.01)i; *C08F 297/04*(2006.01)i; *C08L 7/00*(2006.01)i; *C08L 15/00*(2006.01)i; *C08L 21/00*(2006.01)i; *C08K 3/011*(2018.01)i; *C08K 3/013*(2018.01)i; *C08K 3/04*(2006.01)i; *C08K 3/36*(2006.01)i; *B60C 15/06*(2006.01)i

FI: C08L21/00; C08L7/00; C08K3/04; C08K3/36; C08C19/22; C08C19/02; C08K3/011; C08K3/013; C08F297/04; B60C1/00 B; B60C1/00 Z; B60C15/06 C; B60C15/06 B; B60C1/00 C; C08L15/00

According to International Patent Classification (IPC) or to both national classification and IPC

**B. FIELDS SEARCHED**

Minimum documentation searched (classification system followed by classification symbols)

B60C1/00; C08C19/02; C08C19/22; C08F297/04; C08L7/00; C08L15/00; C08L21/00; C08K3/011; C08K3/013; C08K3/04; C08K3/36; B60C15/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 7-238187 A (ASAHI CHEM. IND. CO., LTD.) 12 September 1995 (1995-09-12) | 1-7, 9-13 |
| | claims, paragraph [0032], S-19, R-15 of tables 2, 4, example 35, comparative example 30 | |
| Y | | 8, 14-18 |
| X | WO 2003/085010 A1 (ASAHI KASEI K.K.) 16 October 2003 (2003-10-16) | 1-3, 9, 11-13 |
| | claims, page 98, line 14, page 104, lines 2-3, examples 1-4, 6-7, 9, 16-18 of tables 1, 2, table 4 | |
| X | WO 2019/151126 A1 (JSR CORP.) 08 August 2019 (2019-08-08) | 1-18 |
| | claims, paragraphs [0034], [0048]-[0051], [0055]-[0056], [0066]-[0067], example 1 | |
| Y | JP 8-245839 A (ASAHI CHEM. IND. CO., LTD.) 24 September 1996 (1996-09-24) | 8, 14-18 |
| | paragraph [0045] | |
| A | WO 2011/129425 A1 (ASAHI KASEI K.K.) 20 October 2011 (2011-10-20) | 1-18 |
| | paragraph [0110] | |

[✓] Further documents are listed in the continuation of Box C.   [✓] See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 March 2022** | **15 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2021/047600** |

**C. DOCUMENTS CONSIDERED TO BE RELEVANT**

| Category* | Citation of document, with indication, where appropriate, of the relevant passages | Relevant to claim No. |
| --- | --- | --- |
| A | JP 2017-133026 A (NIPPON ZEON CO., LTD.) 03 August 2017 (2017-08-03) paragraph [0188] | 1-18 |

Form PCT/ISA/210 (second sheet) (January 2015)

INTERNATIONAL SEARCH REPORT
Information on patent family members

International application No.

**PCT/JP2021/047600**

| Patent document cited in search report | | | Publication date (day/month/year) | Patent family member(s) | | | Publication date (day/month/year) |
|---|---|---|---|---|---|---|---|
| JP | 7-238187 | A | 12 September 1995 | (Family: none) | | | |
| WO | 2003/085010 | A1 | 16 October 2003 | US | 2005/0171276 | A1 | |
| | | | | claims, paragraphs [0374], [0398], tables 1, 2, examples 1-4, 6-7, 9, 16-18, table 4 | | | |
| | | | | US | 2009/0124730 | A1 | |
| | | | | CN | 1649907 | A | |
| | | | | CN | 101696248 | A | |
| | | | | CN | 101696249 | A | |
| WO | 2019/151126 | A1 | 08 August 2019 | TW | 201936753 | A | |
| JP | 8-245839 | A | 24 September 1996 | (Family: none) | | | |
| WO | 2011/129425 | A1 | 20 October 2011 | US | 2013/0023624 | A1 | |
| | | | | paragraph [0135] | | | |
| | | | | US | 2016/0096909 | A1 | |
| | | | | EP | 2559709 | A1 | |
| | | | | EP | 2700658 | A1 | |
| | | | | CN | 102791743 | A | |
| | | | | KR | 10-2012-0130253 | A | |
| | | | | CN | 103980390 | A | |
| JP | 2017-133026 | A | 03 August 2017 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003085010 A
- JP 2010270314 A
- WO 2019151126 A
- WO 2019151127 A
- WO 2019078083 A
- WO 2014133097 A
- WO 9605250 A
- JP 2000053706 A
- WO 2002002663 A
- WO 2015006179 A
- WO 2019171679 A
- WO 2019142501 A
- JP 2021001427 A
- JP 2021065420 A

**Non-patent literature cited in the description**

- **I. M. KOLTHOFF et al.** *J. Polym. Sci.,* 1946, vol. 1, 429
- *Kautschuk Gummi Kunststoffe,* 1999, vol. 52 (12), 799
- **J. BICERANO.** Prediction of Polymer Properties. Marcel Dekker, 2002
- **R. R. HAMPTON.** *Analytical Chemistry,* 1949, vol. 21, 923